# EUROPEAN PATENT SPECIFICATION

(11) **EP 1 906 628 B1**
(45) Date of publication and mention of the grant of the patent: **24.04.2013**
(21) Application number: 07019299.2
(22) Date of filing: 01.10.2007
(51) Int. Cl.: H04L 29/08, H04L 29/06

(54) **Inter-client communication log management system**
Interclient-Kommunikationsprotokollsystem
Système de gestion d'enregistrement de communication inter-client

(30) Priority: 29.09.2006 JP 2006266348
(43) Date of publication of application: 02.04.2008
(73) Proprietor: Hitachi, Ltd., Chiyoda-ku Tokyo 100-8280 (JP)
(72) Inventor: Takata, Osamu, Tokyo 100-8220 (JP); Kaji, Tadashi, Tokyo 100-8220 (JP); Fujishiro, Takahiro, Tokyo 100-8220 (JP); Hoshino, Kazuyoshi, Tokyo 100-8220 (JP); Sawai, Yuko, Tokyo 100-8220 (JP)
(74) Representative: MERH-IP Matias Erny Reichl Hoffmann

(56) References cited:
- US-A1- 2003 037 131
- US-A1- 2005 220 039
- US-A1- 2006 095 768

## Description

### INCORPORATION BY REFERENCE

This application claims a priority from the Japanese patent application No. 2006-266348 filed on September 29, 2006.

### Background of the Invention

The present invention relates to a system which manages a communication log of communicationperformedbetween a communication source apparatus and a communication destination apparatus.

In cases where a communication terminal communicates with another communication terminal via a network, a system is proposed as disclosed in US 6,128,657 in order to manage communication states and the like of the communication terminals. The system is provided with an apparatus which manages the communication states (hereinafter, referred to as "communication state management apparatus"), and notifies the communication state management apparatus of changes in the communication states of the terminals.

In the system, in a case where a communication terminal performs a communication with another communication terminal or a server which provides a service, the communication state management apparatus receives a log of the communication involved.

According to the system in which each of a communication source terminal and a communication destination terminal notifies the communication state management apparatus of the change in the communication state, the communication state management apparatus can maintain a log of the changes in the communication states of the communication source terminal and communication destination terminal.

US 2005/0220039 discloses a session management server (e.g., a SIP server) that is comprised of control means for determining, when receiving a session setup request packet issued from a client terminal to a particular application server, whether the client terminal is authorized to receive an information service to be provided by the application server, in place of the particular application server, and forwarding the session setup request packet to the particular application server when the determination resulted in success.

### Summary of the Invention

In cases where the communication source terminal and the communication destination terminal each notify the communication state management apparatus of a change in communication state, the change in the communication state is not always transmitted to the communication state management apparatus, depending on a state of a communication path between the communication source terminal or the communication destination terminal and the communication state management apparatus.

Alternatively, in a case where both the communication source terminal and the communication destination terminal do not notify the communication state management apparatus of the change in the communication state on purpose, the communication state management apparatus cannot detect an accurate change in the communication state of the terminal.

From another viewpoint, if the number of communication terminals is large, the terminals transmit a large number of notifications of the changes in the communication states to the communication state management apparatus, which imposes a load on the communication state management apparatus while also imposing a load on communication paths between the terminals and the communication state management apparatus.

In addition, in the case where the changes in the communication states of the communication source terminal and the communication destination terminal are managed by the communication state management apparatus, unless the notifications of the changes in the communication states transmitted by each of the communication source terminal and the communication destination terminal have contents consistent with each other, the contents of the notifications lack reliability.

In recent years, a technology has been desired to quickly detect and prevent illegal access and information leakage which occur frequently, but the above-mentioned conventional technology has been insufficient to meet this desire.

In a system in which a session management server not onlymanages the communication source terminal and the communication destination terminal but also manages communications performed therebetween, the management is insufficient based merely on the contents of the notifications transmitted from the communication source terminal and the communication destination terminal.

In a case where a communication terminal uses a given application to communicate with a server which provides a service, the server which provides the service often has an application program to maintain a log of the change in the communication state. In this case, the log of the change in the communication state is stored in each server that provides a service. Therefore, to verify a communication log of a specific user in a case where illegal access is detected or the like, it is necessary to reference each communication log that are stored separately in each server.

The present invention has been made in view of the above-mentioned problems. These problems are solved by the subject-matter according to the independent claim 1. The dependent claims refer to preferred embodiments of the invention. The present invention therefore provides a technology in which not only a communication source apparatus and a communication destination apparatus but also a session management server which manages a communication session between the communication source apparatus and the communication destination apparatus maintains a communication log containing changes in communication states which include a communication start and a communication end, and transmits the communication log to a log management server.

Note that in this specification, the term "communication log" represents information that indicates a part or an entirety of facts including a start time of a communication and an end time of the communication performed from a given communication source apparatus to a given communication destination apparatus.

In addition, the term "session" used in this specification represents a unit of communication performed between two apparatuses, which starts when one of the two apparatuses transmits a communication start request until the one apparatus receives from the other apparatus a communication end response at the end of the communication after a communication is performed between the two apparatuses.

Further, in the present invention, if the communication is performed in a network that forms a single network domain, the session management server which manages the communication and the log management server which manages the communication log are arranged in the network domain.

Note that in this specification, the term "network domain" represents a concept of managing apparatuses existing in a network as a group based on specific criteria. The expression "a plurality of apparatuses belonging to the same network domain" indicates that, for example, IP addresses of the apparatuses or domain names corresponding to the IP addresses match each other in front part or upper part within a range that satisfies the criteria. Hereinafter, the network domain may simply be referred to as "domain".

When the communication source apparatus communicates with the communication destination apparatus, processing for a communication start (session establishment) and a communication end (session deletion) are performed through the mediation of the session management server. The session management server records the communication start and the communication end in a communication log when mediating the processing for the communication start and the communication end.

In a case where the network is composed of a plurality of network domains, the session management server and the log management server are arranged in each of the network domains. The session management server manages communications between communication apparatuses of a domain to which the session management server itself belongs. The log management server manages communication logs created by communication apparatuses of a domain to which the log management server itself belongs and a communication log created by the session management server of the domain to which the log management server itself belongs.

In a case where the communication source apparatus and the communication destination apparatus which belong to different domains perform a communication in the network composed of a plurality of network domains, the session management server of the domain to which the communication source apparatus belongs cooperates with the sessionmanagement server of the domain to which the communication destination apparatus belongs to mediate the processing for the communication start and the communication end. The session management server of each domain creates communication logs for recording at the communication start and at the communication end.

In a case where the communication source apparatus and the communication destination apparatus which belong to the same domain performs a communication, the processing for the communication start and the communication end are performed via the session management server of the domain to which the communication source apparatus and the communication destination apparatus belong. The session management server of the domain to which the communication source apparatus and the communication destination apparatus belong records the communication start and the communication end to a communication log when mediating the processing for the communication start and the communication end.

In either case, when the communication source apparatus and the communication destination apparatus perform a communication, the communication source apparatus and the communication destination apparatus each create communication logs for recording at the communication start, at the communication end, and during the communication per communication session. The session management server creates communication logs for recording at the communication start and at the communication end per communication session.

The communication source apparatus and the communication destination apparatus each transmit the created communication logs for recording at the communication start, at the communication end, and during the communication to the log management server of a domain to which the own apparatus belongs. The session management server transmits the communication logs for recording at the communication start and at the communication end to the log management server of a domain to which the own apparatus belongs.

The log management server receives the communication logs from the communication source apparatus, communication destination apparatus, and session management server of a domain to which the log management server itself belongs, and manages the received communication logs.

According to the present invention, even when the numbers of communication source apparatuses and communication destination apparatuses are large, it is possible to divide the network into a plurality of domains, distributively connect the communication source apparatuses and the communication destination apparatuses to their corresponding domains, and arrange the session management server and the log management server in each network domain.

When the communication source apparatus and the communication destination apparatus thus performs a communication, a plurality of communication logs are created by a plurality of apparatuses per communication session and managed by the log management server. That is, if the network forms a single network domain, the communication logs are created by the communication source apparatus, the communication destination apparatus, and the session management server of the network domain to which the communication source apparatus and the communication destination apparatus belong. If the network is composed of a plurality of network domains, the communication logs are created by the communication source apparatus, the communication destination apparatus, the session management server of the network domain to which the communication source apparatus belongs, and the session management server of the network domain to which the communication destination apparatus belongs.

As described above, the communication logs are created by a plurality of apparatuses for one communication session performed by the communication source apparatus and the communication destination apparatus. Therefore, to obtain accurate information on the performed communication from the communication log, the present invention further includes verifying consistency among the plurality of communication logs.

If the network forms a single network domain, it is possible to obtain the accurate information on the communication by verifying the consistency among the communication logs which are stored in the log management server of the network domain and which are created by the communication source apparatus, the communication destination apparatus, and the session management server of the network domain.

Alternatively, if the network is composed of a plurality of network domains, the accurate information on the communication is obtained by verifying the consistency between the communication logs of the two log management servers. That is, it is possible to obtain the accurate information on the communication by verifying the consistency among the communication log which has been created by the communication source apparatus and which is stored in the log management server of the network domain to which the communication source apparatus belongs, the communication log created by the session management server of the network domain to which the communication source apparatus belongs, the communication log which has been created by the communication destination apparatus and which is stored in the log management server of the network domain to which the communication destination apparatus belongs, and the communication log which is created by the session management server of the network domain to which the communication destination apparatus belongs.

Further, the communication logs between the communication source apparatus and the communication destination apparatus are collectively managed by the log management server. Therefore, only the communication logs stored in the log management server must be referenced to verify the consistency between the communication logs.

According to a more specific aspect of the present invention, there is provided a communication log management system for a network which is composed of a plurality of network domains including a first network domain including: a communication source apparatus; a first session management server which manages a communication performed within the first network domain; and a second network domain including: a communication destination apparatus; a second session management server which manages a communication performed within the second network domain, the communication source apparatus and the first session management server belonging to the first network domain, the communication destination apparatus and the second session management server belonging to the second network domain, in which the first session management server of the first network domain to which the communication source apparatus belongs and the second session management server of the second network domain to which the communication destination apparatus belongs are each configured to: mediate at least one of processing performed at a communication start of a communication and processing performed at a communication end of the communication in a case where the communication is performed between the communication source apparatus and the communication destination apparatus; and create and maintain a session management log regarding the mediated at least one of the processing performed at the communication start of the communication and the processing performed at the communication end of the communication.

Further, in the communication log management system further including a plurality of log management servers which belong to the plurality of network domains on a one-to-one basis and each manage a communication performed within the corresponding network domain, the plurality of log management servers including a first log management server and a second log management server: each of the first sessionmanagement server and the second sessionmanagement server may be configured to transmit the created and maintained session management log to the log management server belonging to the same network domain; and the log management server may be configured to receive the transmitted session management log and manage the session management log.

Further, in the communication log management system: the first network domain may be identical to the second network domain; the first sessionmanagement servermaybe identical to the second session management server; and the log management servers which belong to the plurality of network domains on a one-to-one basis may be identical to each other.

Further, in the communication log management system: the communication source apparatus and the communication destination apparatus may each be configured to: create a communication apparatus log regarding at least one of the processing performed at the communication start, the processing performed at the communication end, and processing performed during the communication; and transmit the created communication apparatus log to the log management server of the same network domain; and the log management server may be configured to receive the transmitted communication apparatus log and manage the communication apparatus log.

Further, in the communication log management system, any one of the log management servers may be configured to perform verification of consistency between: the session management log which is received from the first session management server of the first network domain and managed by the first log management server of the first network domain to which the communication source apparatus belongs; and the session management log which is received from the second session management server of the second network domain and managed by the second log management server of the second network domain to which the communication destination apparatus belongs.

Further, in the communication log management system, any one of the log management servers may be configured to perform verification of consistency between: the session management log which is received from the first session management server and managed by the first log management server of the first network domain to which the communication source apparatus belongs, and the communication apparatus log received from the communication source apparatus and managed by the first log management server; and the session management log which is received from the second session management server and managed by the second log management server of the second network domain to which the communication destination apparatus belongs, and the communication apparatus log received from the communication destination apparatus and managed by the second log management server, respectively.

Further, in the communication log management system, in the verification of the consistency, the any one of the log management servers may be configured to set an address and port number of the communication source apparatus and an address and port number of the communication destination apparatus, and optionally a communication destination URL as verification subjects of the consistency regarding at least one of the processing performed at the communication start and the processing performed at the communication end.

Further, in the communication log management system, in the verification of the consistency, the any one of the log management servers may be configured to further set one of an amount in bytes of communication data communicated within a predetermined time period and a content of the communication data as another verification subject of the consistency regarding the processing performed during the communication.

Further, in the communication log management system: the first log management server of the first network domain may be configured to: establish an encrypted communication path with respect to the second log management server in a case of receiving from the communication source apparatus of the first network domain a request for the verification of the consistency between at least one of the session management log and the communication apparatus log that are managed by the first log management server and at least one of the session management log and the communication apparatus log that are managed by the second log management server of the second network domain; and transmit a request to obtain the at least one of the session management log and the communication apparatus log regarding the request for the verification of the consistency to the second log management server via the encrypted communication path; the second log management server may be configured to transmit the requested at least one of the session management log and the communication apparatus log to the first log management server via the encrypted communication path; and the first log management server may be configured to perform the requested verification of the consistency based on the received at least one of the session management log and the communication apparatus log and the at least one of the session management log and the communication apparatus log that are managed by the first log management server itself.

Further, in the communication log management system: the first log management server of the first network domain may be configured to transmit a request to obtain the at least one of the session management log and the communication apparatus log that are managed by the second log management server to the first session management server in a case of receiving from the first session management server of the first network domain a request for the verification of the consistency between at least one of the session management log and the communication apparatus log that are managed by the first log management server and at least one of the session management log and the communication apparatus log that are managed by the second log management server of the second network domain; the first session management server may be configured to transmit the request for the obtainment to the second session management server; the second session management server may be configured to obtain the requested at least one of the session management log and the communication apparatus log from the second log management server based on the received request for the obtainment, and transmit the obtained at least one of the session management log and the communication apparatus log to the first session management server of the first network domain; the first session management server may be configured to transmit the received at least one of the session management log and the communication apparatus log to the first log management server; and the first log management server may be configured to perform the requested verification of the consistency based on the received at least one of the session management log and the communication apparatus log and the at least one of the session management log and the communication apparatus that are managed by the first log management server itself.

According to the above-mentioned aspect, it is possible to create a more reliable communication log because a third-party apparatus other than the communication source apparatus or the communication destination apparatus, that is, the sessionmanagement server creates the communication log.

Further, if the communication source apparatus or the communication destination apparatus cannot transmit the communication log to the log management server, or even if the communication source apparatus or the communication destination apparatus has not transmitted the communication log to the log management server on purpose, the communication log created by the session management server allows detection of the fact that the communication log has not been transmitted. Accordingly, it is possible to more accurately grasp operations of the entire system.

Further, when the numbers of communication source apparatuses and communication destination apparatuses that are connected to the system are large, the communication source apparatuses and the communication destination apparatuses are arranged distributively in a plurality of network domains, which makes it possible to balance communication traffic caused by transmitting the communication logs, and also manage the communication logs distributively in the log management servers of the respective network domains.

By distributively managing the communication logs, it is possible to reduce loads on the respective log management servers, and also increase reliability of the entire system because even when a failure occurs in a given log management server, no influence is placed on another log management server.

Further, by verifying the consistency among the communication logs created by the communication source apparatus, the communication destination apparatus, and the session management server, it is possible to obtain more accurate information on the communication between the communication source apparatus and the communication destination apparatus.

Further, the log management server collectively manages the communication logs, which makes it possible to easily perform management applications including storage of the communication logs and reference to the communication logs.

Further, a third party can manage the log management server that collectively manages the communication logs, which can increase the reliability of the communication log. The reason is that if different organizations perform log management and session management, for example, the log that has already been stored cannot be modified on a session management end, while even if the session management end transmits a fraudulent log to the log management server, the fraud is evident because the fraudulent log becomes inconsistent with the log transmitted from the communication apparatus.

Note that the terms "communication source apparatus" and "communication destination apparatus" according to the above-mentioned aspect may represent a communication apparatus which terminates the communication within the network managed by the session management server. For example, at least one of the communication source apparatus and the communication destination apparatus may be a gateway apparatus located on a boundary between the above-mentioned network managed by the session management server and another network so that the network managed by the session management server may be connected to another network via the gateway apparatus.

According to the present invention, it is possible to create communication logs and verify the consistency between the created logs with high reliability.

These and other benefits are described throughout the present specification. A further understanding of the nature and advantages of the invention may be realized by reference to the remaining portions of the specification and the attached drawings.

### Brief Description of the Drawings

In the accompanying drawings:
FIG. 1 illustrates a schematic configuration of an encrypted communication system according to an embodiment of the present invention;
FIG. 2 illustrates a detailed functional configuration of a client (20) or an application server (30);
FIG. 3 illustrates a detailed functional configuration of a session management server (40);
FIG. 4 illustrates a detailed functional configuration of a log management server (50);
FIG. 5 illustrates a data configuration of a communication log for recording at a communication start/end;
FIG. 6 illustrates a data configuration of a communication log for recording during a communication created by each of the client (20) and the application server (30);
FIG. 7 illustrates a processing sequence in which the client (20) performs a communication start processing with respect to the application server (30) and creates a communication log;
FIG. 8 illustrates a processing sequence in which the client (20) performs a communication end processing with respect to the application server (30) and creates a communication log;
FIG. 9 illustrates a processing sequence in which the session management server (40) transmits to the log management server (50) communication logs for recording at a communication start and a communication end which have been created by the session management server (40) itself;
FIG. 10 illustrates a processing sequence in which the client (20) transmits the created communication log to the log management server (50);
FIG. 11 illustrates another processing sequence in which the client (20) transmits the created communication log to the log management server (50);
FIG. 12 illustrates a processing sequence in which the client (20) creates and maintains a communication log instructed by the log management server (50) and transmits the communication log to the log management server (50);
FIG. 13 illustrates another processing sequence in which the client (20) creates and maintains a communication log instructed by the log management server (50) and transmits the communication log to the log management server (50);
FIG. 14 illustrates a processing sequence in which the log management server (50) causes the client (20) to make a setting for the communication log recording;
FIG. 15 illustrates another processing sequence in which the log management server (50) causes the client (20) to make a setting for the communication log recording;
FIG. 16 illustrates a processing sequence in which the client (20) references the communication log stored in the log management server (50);
FIG. 17 illustrates another processing sequence in which the client (20) references the communication log stored in the log management server (50);
FIG. 18 illustrates a processing sequence in which a log management server (50-1) verifies consistency between communication logs;
FIG. 19 illustrates another processing sequence in which the log management server (50-1) verifies consistency between the communication logs; and
FIG. 20 illustrates a hardware configuration of a computer which implements the client (20), the application server (30), the session management server (40), and the log management server (50).

### Description of the Embodiments

Hereinafter, description will be made of embodiments of the present invention.

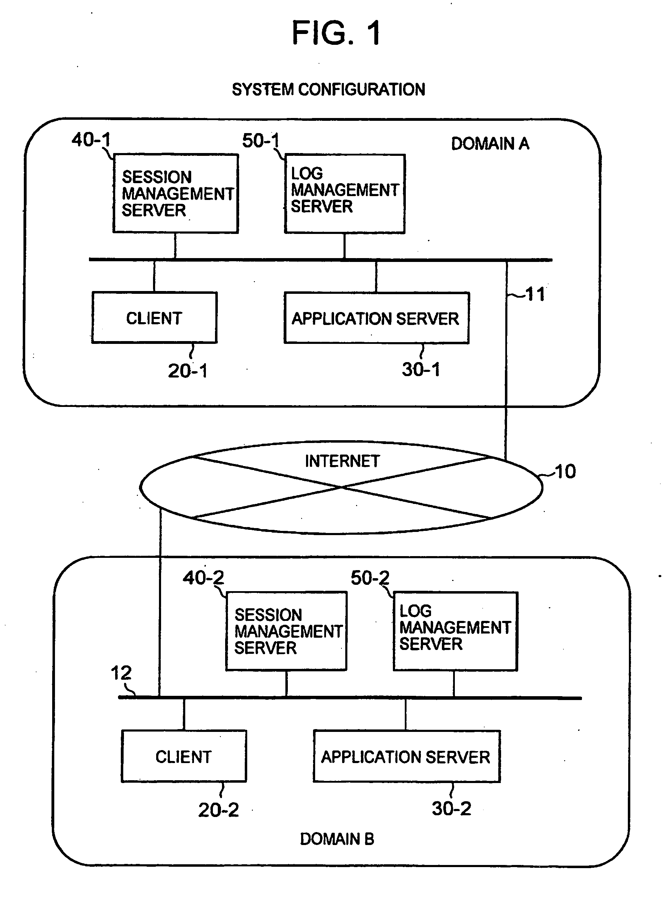

FIG. 1 is a network configuration diagram of a communication system to which an embodiment of the present invention is applied. As shown in FIG. 1, the communication system according to this embodiment includes a network 11 of a domain A and a network 12 of a domain B, in each of which a client terminal (hereinafter, referred to simply as "client") 20 (20-1, 20-2) corresponding to a communication source apparatus, an application server 30 (30-1, 30-2) corresponding to a communication destination apparatus, a session management server 40 (40-1, 40-2), and a log management server 50 (50-1, 50-2) are connected to one other. The network 11 of the domain A and the network 12 of the domain B are connected to each other via the Internet 10.

Note that there may be provided a firewall apparatus on boundaries between the domains A and B and the Internet 10. In addition, the client 20 may serve as the communication destination apparatus, while the application server 30 may serve as the communication source apparatus. Further, the numbers of clients 20 and application servers 30 are both one in each domain, but may be any numbers.

In the following description, a communication performed between apparatuses is explained as an encrypted communication, but may be an unencrypted communication.

First, description will be made of the client 20. The client 20 performs a connection processing with respect to the application server 30 in the same domain to which the client 20 itself belongs or in the other domain via the session management server 40 within the one domain. After that, a communication path (communication session) is established between the client 20 and the application server 30, after which the encrypted communication is performed.

For example, the client 20-1 can establish a connection with respect to the application server 30-1 via the log management server 50-1 to perform an encrypted communication with the application server 30-1. The client 20-1 can also establish a connection with respect to the application server 30-2 via the log management server 50-1 and the log management server 50-2 to perform an encrypted communication with the application server 30-2. Meanwhile, the client 20-2 can establish a connection with respect to the application server 30-2 via the log management server 50-2 to perform an encrypted communication with the application server 30-2. The client 20-2 can also establish a connection with respect to the application server 30-1 via the log management server 50-2 and the log management server 50-1 to perform an encrypted communication with the application server 30-1.

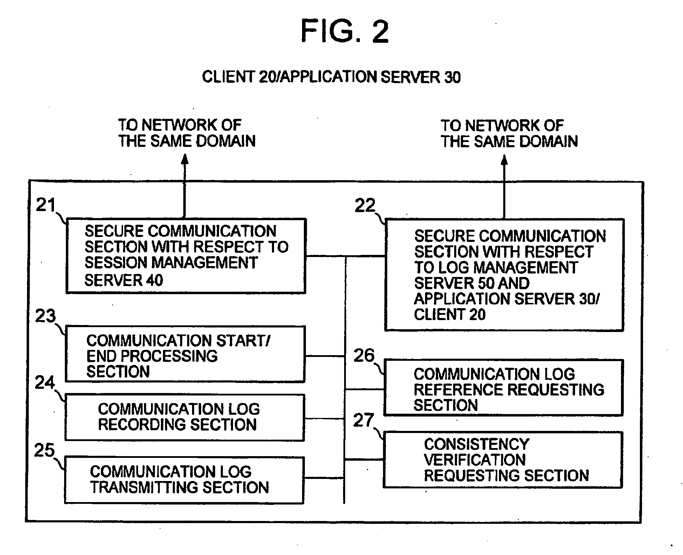

FIG. 2 is a functional configuration diagram schematically showing the client 20.

As shown in FIG. 2, the client 20 includes: a secure communication section 21 which performs secure communications with the session management server 40; a secure communication section 22 which performs secure communications with the log management server 50, the application server 30, and the client 20; a communication start/end processing section 23; a communication log recording section 24; a communication log transmitting section 25; a communication log reference requesting section 26; and a consistency verification requesting section 27.

The secure communication section 21 has a function of establishing a secure communication path (encrypted communication path) with the session management server 40 to perform a secure communication.

The secure communication section 22 has a function of performing secure communications with the application server 30 and the log management server 50 by using the secure communication path, which is established through the mediation of the session management server 40 and which does not pass the session management server 40. The expression "perform a secure communication" means that an apparatus and a communication counterpart apparatus establish an encrypted communication path by authenticating each other and sharing an encryption key for communication, and performs an encrypted communication using the shared encryption key. The secure communication can be performed by using any known technology.

The communication start/end processing section 23 has a function of requesting the session management server 40 via the secure communication section 21 for a start or end of a communication with respect to another apparatus such as the application server 30 or the log management server 50, and a function of judging whether or not to perform a communication start or end requested by another apparatus and responding to the another apparatus.

The communication log recording section 24 has a function of monitoring processing of the secure communication section 22 and creating communication logs of the communication with respect to the application server 30 serving as a communication destination, for recording at the communication start, the communication end, and during the communication.

The communication log transmitting section 25 has a function of transmitting the communication log created by the communication log recording section 24 to the log management server 50 via the secure communication section 22.

The communication log reference requesting section 26 has a function of requesting the log management server 50 for reference to the communication log which has been created by the own apparatus (client 20) and which is stored in the log management server 50.

The consistency verification requesting section 27 has a function of requesting the log management server 50 for verification of consistency among the communication log that has been created by the own apparatus (client 20), the communication log created by the communication counterpart (for example, application server 30), and the communication log generated by the session management server 40 that has mediated the communication, which are stored in the log management server 50.

Note that the application server 30 has the configuration shown in FIG. 2 similarly to the above-mentioned client 20. However, the secure communication section 22 of the application server 30 has a function of performing secure communications with the client 20 and the log management server 50 by using the secure communication path established through the mediation of the session management server 40.

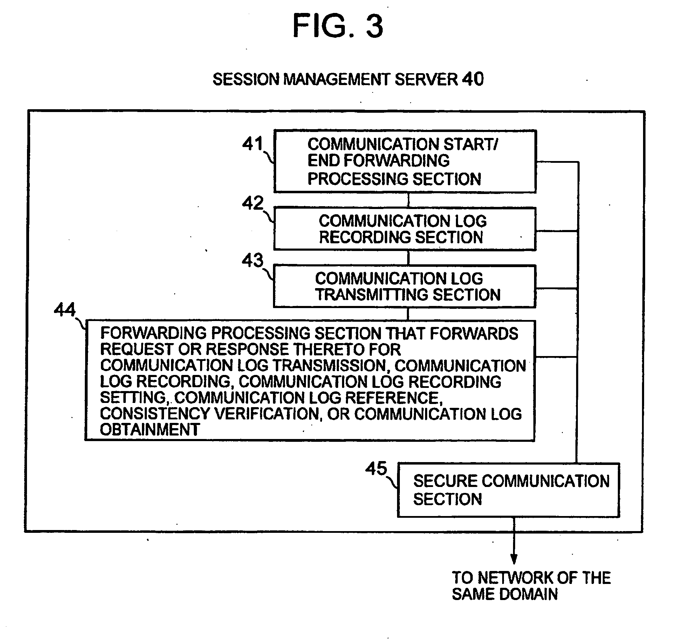

FIG. 3 is a functional configuration diagram schematically showing the session management server 40 shown in FIG. 1.

As shown in FIG. 3, the session management server 40 includes a communication start/end forwarding processing section 41, a communication log recording section 42, a communication log transmitting section 43, a forwarding processing section 44, and a secure communication section 45.

The communication start/end forwarding processing section 41 has the following functions. Upon reception of a request for a communication start or end via the secure communication section 45, the communication start/end forwarding processing section 41 performs authentication on a request source apparatus, and if the authentication is successful, requests the secure communication section 45 to forward the request to a request destination. In addition, upon reception of a response to the request for a communication start or end via the secure communication section 45, the communication start/end forwarding processing section 41 requests the secure communication section 45 to forward the response to a response destination (request source).

The secure communication section 45 performs forwarding as requested.

Further, the communication start/end forwarding processing section 41 creates a communication log used when the request for the communication start or end or the response thereto is processed.

The communication log recording section 42 has a function of performing recording in the communication log for the communication start/communication end which is outputted by the communication start/end forwarding processing section 41 when processing the request for the communication start or end or the response thereto, and requesting the communication log transmitting section 43 to transmit the communication log that has been subjected to the recording to the log management server 50. The transmission may be requested after each communication log has finished recording. Alternatively, after the communication log recording section 42 has accumulated therein communication logs to a predetermined amount, the communication log recording section 42 can request the communication log transmitting section 43 to collectively transmit the communication logs.

The communication log transmitting section 43 has a function of, when requested for the transmission of the communication log, requesting the secure communication section 45 to transmit the communication log to the log management server 50.

The secure communication section 45 has a function of transmitting, upon reception of the request for transmission of the communication log, the communication log to the log management server 50. Note that the transmission of the communication log requested by the session management server 40 is performed with respect to the log management server 50 within a domain to which the session management server 40 itself belongs. For example, the session management server 40-1 transmits the communication log to the log management server 50-1, while the session management server 40-2 transmits the communication log to the log management server 50-2.

The forwarding processing section 44 has the following function. That is, when the request for the communication log transmission, the communication log recording, the communication log recording setting, the communication log reference, the consistency verification, or the communication log obtainment, or the response thereto is received via the secure communication section 45, the forwarding processing section 44 requests the secure communication section 45 to forward the received request or the received response thereto to the request destination or response destination (request source), respectively. The secure communication section 45 performs forwarding as requested.

Upon reception of the communication request from the communication start/end forwarding processing section 41, the communication log transmitting section 43, or the forwarding processing section 44, the secure communication section 45 performs a secure communication with respect to the client 20, the application server 30, the logmanagement server 50, or another session management server 40. The expression "perform a secure communication" means that an apparatus and a communication counterpart apparatus establish an encrypted communication path by authenticating each other and sharing an encryption key for communication, and performs an encrypted communication using the shared encryption key. The secure communication can be performed by using any known technology.

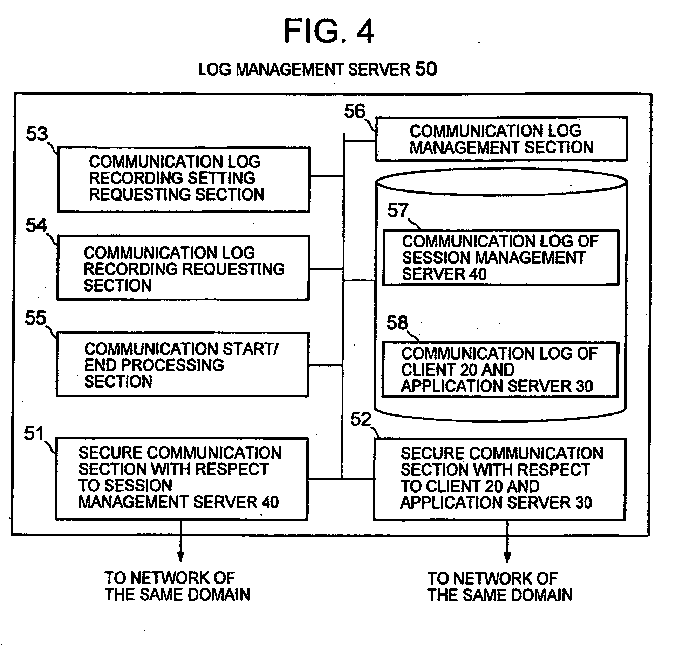

FIG. 4 is a configuration diagram schematically showing the log management server 50.

As shown in FIG. 4, the log management server 50 includes a secure communication section 51, a secure communication section 52, a communication log recording setting requesting section 53, a communication log recording requesting section 54, a communication start/end processing section 55, a communication log management section 56, a communication log 57, and a communication log 58.

The secure communication section 51 has a function of establishing a secure communication path (encrypted communication path) between the session management server 40 when receiving a request for a communication with respect to the session management server 40 from each functional component of the log management server 50, encrypting communication data, and securely transmitting the communication data to the session management server 40. The secure communication section 51 also has a function of decoding the encrypted data when receiving the encrypted data from the session management server 40, and passing the decoded data to each functional component of the log management server 50.

The secure communication section 52 has a function of performing secure communications with the client 20 and the application server 30 by using the secure communication path established through the mediation of the session management server 40. The expression "perform a secure communication" means that a given apparatus and a communication counterpart apparatus establish an encrypted communication path by authenticating each other and sharing an encryption key for communication, and performs an encrypted communication using the shared encryption key. The secure communication can be performed by using any known technology.

The communication log recording setting requesting section 53 has a function of requesting the client 20 or the application server 30 for making a setting for the communication log recording. Examples of the "setting" include such a setting that a communication log is created for a communication with respect to a specific IP address and a setting for determining how detailed the communication log is (whether or not contents of communication data included in communication data information 586 are to be recorded for the communication with respect to a specific IP address).

The communication log recording requesting section 54 has a function of causing the log management server 50 to instruct the client 20 or the application server 30 on the communication log recording at a predetermined timing. For example, the client 20 and the application server 30 may be so configured that the communication log is not created without an instruction for the communication log recording, and that the communication log is created with a communication log recording instruction issued by the communication log recording requesting section 54 as a trigger.

According to this function, when another system judges that there is a need for logs of a communication between the client 20 and the application server 30 and requests the communication log recording requesting section 54 for the communication log recording, the communication log recording requesting section 54 can transmit a request for the communication log recording to the client 20 and the application server 30.

Alternatively, for example, if the log management server 50 or an administrator thereof detects that an unauthorized communication may be performed in the network, the real time communication log can be recorded in response to an instruction issued by the communication log recording requesting section 54.

The communication start/end processing section 55 has a function of performing processing for an establishment and an end of a secure communication path with the session management server 40 so that the secure communication section 52 can perform an encrypted communication with respect to the client 20 or the application server 30.

The communication log management section 56 has a function of storing communication logs received from the client 20, the application server 30, and the session management server 40 in the communication log 57 and the communication log 58, searching the communication log 57 and the communication log 58 in response to a search request followed by returning search results, and confirming whether or not the logs stored in the communication log 57 and the communication log 58 are consistent.

To be specific, the communication log management section 56 stores the communication log received from the session management server 40 in the communication log 57, and the communication logs received from the client 20 and the application server 30 in the communication log 58.

When a secure communication is performed between the client 20 and the application server 30, the client 20 and the application server 30 transmit the communication logs to the log management server 50, and the log management server 50 stores the communication logs in the communication log 58. In addition, the sessionmanagement server 40 transmits the communication log to the log management server 50, and the log management server 50 stores the communication log in the communication log 57. That is, stored in the logmanagement server 50 are 3 kinds of communication logs respectively created bytheclient20, the application server 30, and the sessionmanagement server 40 per session of the secure communication between the client 20 and the application server 30.

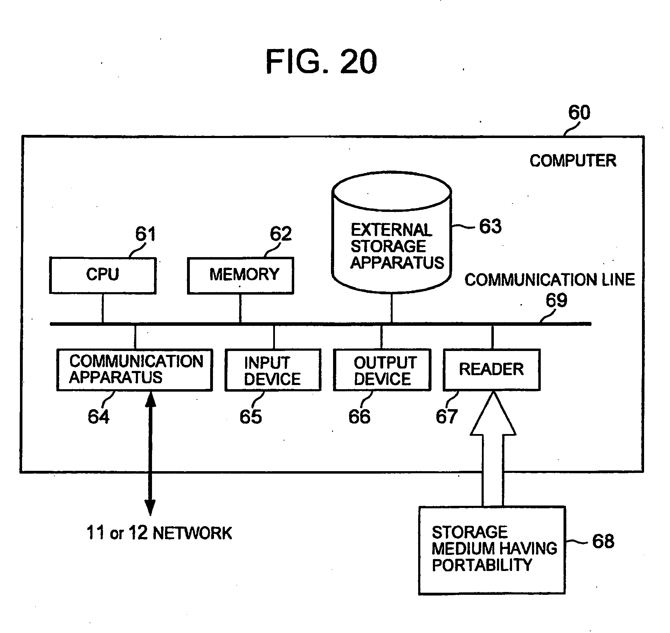

Note that the respective apparatuses including the client 20, the application server 30, the session management server 40, and the log management server 50 and the respective functions provided thereto, which are shown in FIGS. 2 to 4, may be implemented as hardware. Further, in a computer system 60 illustrated in FIG. 20, which includes a CPU 61, a memory 62, an external storage apparatus 63 such as a hard disk drive, a communication apparatus 64 which performs a communication with another apparatus via the network 11 or 12, an input device 65 such as a keyboard or a mouse, an output device 66 such as a monitor or a printer, a reader 67 which reads information from a storage medium 68 having a portability, and an internal communication line 69 including a bus connecting those apparatuses 61 to 67, the above-mentioned respective apparatuses and respective functions may be implemented by causing the CPU 61 to execute predetermined corresponding programs loaded from the external storage apparatus 63 onto the memory 62.

The programs may be previously stored in the memory 62 or the external storage apparatus 63, or may be loaded when necessary from another apparatus via the storage medium 68 or a communication medium (such as: the network 11, the network 12, or the Internet 10; or a carrier wave or a digital signal that propagates through one of the above-mentioned networks) which is available to the computer 60.

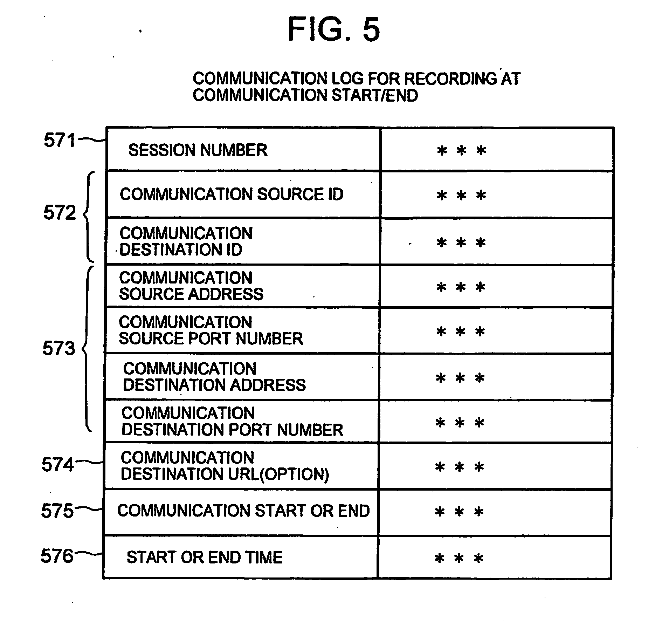

FIG. 5 is a diagram schematically showing a communication log for recording at a communication start or end.

At the communication start, for example, a communication start request is transmitted from the client 20 to the application server 30 via the session management server 40, and communication logs are generated by the client 20, the application server 30, and the session management server 40 when a secure communication session start processing is being performed.

At the communication end, for example, a communication end request is transmitted from the client 20 to the application server 30 via the session management server 40, and communication logs are generated by the client 20, the application server 30, and the session management server 40 when a secure communication session end processing is being performed.

As shown in FIG. 5, the communication log for recording at the communication start/end contains a session number 571, a communication source/communication destination IDs 572, communication source/communication destination information 573, communication destination URL 574, communication start or end identification information 575, and a start or end time 576.

The session number 571 is a number assigned to each communication session that is established between the client 20 and the application server 30 via the session management server 40, and each time a communication session is established, a different number is assigned even in a single communication performed between the same combination of the client 20 and the application server 30.

The communication source/communication destination IDs 572 are IDs which identify a communication source and a communication destination, and are associated with a communication source address and a communication destination address, respectively. For example, an SIP-URI or an ID which identifies a user or a service provider can be used as the communication source ID or the communication destination ID.

The communication source/communication destination information 573 is information which identifies the communication source and the communication destination in the network. For example, it is possible to identify the communication source and the communication destination in an IP network by designating IP addresses as a communication source address and a communication destination address.

The communication destination URL 574 is information on, for example, a communication counterpart in a case of performing a communication via HTTP or the like with a URL designated as the communication counterpart. The information is not essential because there may be a communication in which the URL is not designated as the communication counterpart or may be a case where the URL information is not transmitted to the session management server.

The communication start or end identification information 575 is information indicating which of communication logs for recording at a time of a session establishment (i.e., communication start) and communication logs for recording at a time of a session deletion (i.e., communication end) the communication logs created by the client 20, the application server 30, and the session management server 40 at a timing when a session identified by the session number 571 is established or deleted are.

Stored as the start or end time 576 is a time of performing processing for establishment of the session identified by the session number 571 (communication start processing) or processing for deleting the session (ending the communication). To guarantee the legality of the created communication log, a time of a clock kept by the session management server 40 needs to be accurate. The accurate time can be obtained by, for example, separately installing a server which manages time information and accessing the server by using a protocol which is called "network time protocol (ntp)" and which adjusts an internal clock of the own apparatus to a correct time via the network.

The information of FIG. 5 may include other information. Examples of the other information include information (such as a web, an email, or a file transfer method) which identifies an application performing a communication between the client 20 and the application server 30 and information (such as a URI) which indicates the place of an information resource existing on the Internet.

In addition, the communication source/communication destination information 573 of FIG. 5 may be information such as MAC addresses which identify the network apparatuses of the communication source and the communication destination. Further, the communication source/communication destination information 573 may include information such as "wireless LAN", "wired LAN", or "infrared communication" which specifies the type of the network apparatus itself.

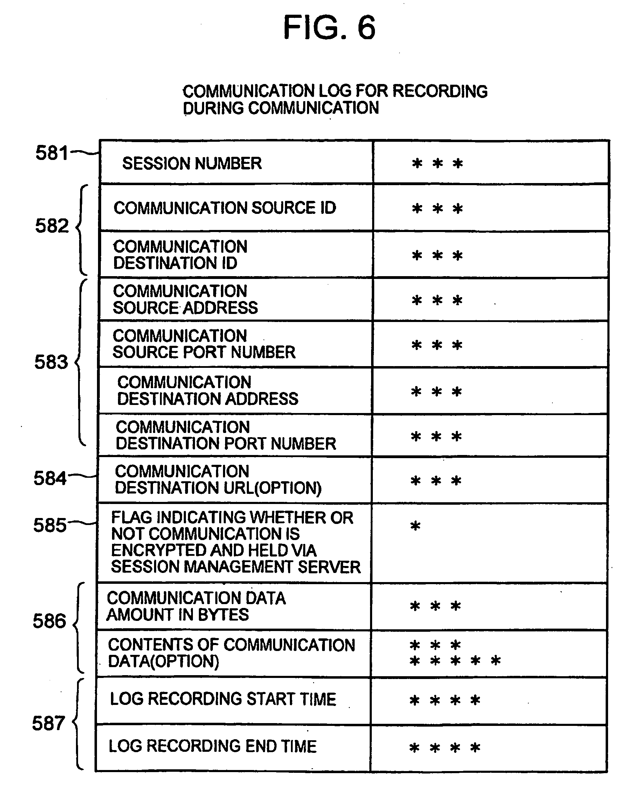

FIG. 6 is a diagram schematically showing a communication log for recording during a communication which is created by each of the client 20 and the application server 30. The communication log is generated by each of the client 20 and the application server 30 while the client 20 and the application server 30 are performing a communication with each other.

As shown in FIG. 6, the communication log for recording during the communication which is created by each of the client 20 and the application server 30 contains a session number 581, a communication source/communication destination IDs 582, communication source/communication destination information 583, communication destination URL 584, a flag 585 indicating whether or not the communication is encrypted, communication data information 586, and log recording start/end times 587.

The session number 581 is a number assigned to each communication session that is established between the client 20 and the application server 30 through the mediation of the session management server 40, and each time a communication session is established, a different number is assigned even in a single communication performed between the same combination of the client 20 and the application server 30.

The communication source/communication destination IDs 582 are IDs which identify a communication source and a communication destination, and are associated with a communication source address and a communication destination address, respectively. For example, an SIP-URI or an ID which identifies a user or a service provider can be used as the communication source ID or the communication destination ID.

The communication source/communication destination information 583 is information which identifies the communication source and the communication destination in the network. For example, it is possible to identify the communication source and the communication destination in an IP network by designating IP addresses as a communication source address and a communication destination address.

The communication destination URL 584 is information on, for example, a communication counterpart in a case of performing a communication via HTTP or the like with a URL designated as the communication counterpart. For example, in a case where the client 20 is connected to an HTTP server operating on the application server 30, the communication destination URL 584 contained in the communication log for recording during the communication which is created by the client 20 is URL information that identifies information stored on the HTTP server on the application server 30 which is accessed by the client 20. Also, the communication destination URL 584 contained in the communication log for recording during the communication which is created by the application server 30 is URL information that identifies information stored on the HTTP server on the application server 30 which is contained in an access request from the client 20. The communication destination URL 584 is not essential because there may be a communication in which the URL is not designated as the communication counterpart.

The flag 585 indicating whether or not the communication is encrypted is an identifier indicating whether or not the communication performed from the client 20 to the application server 30 is using the secure communication path established through the mediation of the session management server 40. The identifier indicates whether the communication session corresponding to the communication log has been established through the mediation of the session management server 40 or whether or not the session has been established between the client 20 and the application server 30 directly without the mediation of the session management server 40. If the session has been established between the client 20 and the application server 30 directly without the mediation of the session management server 40, it is impossible for the session management server 40 to know the fact of the communication, so the session management server 40 does not create the communication log shown in FIG. 5.

The communication data information 586 is composed of an amount of bytes and contents of communication data communicated in a communication session between the client 20 and the application server 30, which is identified by the session number 581. This can leave the size of data communicated between the client 20 and the application server 30 in the communication log for recording during the communication. Further, a communicated packet itself can be left in the log. The client 20 and the application server 30 each create the communication log for recording during the communication, so the communication logs for recording during the communication which are created by the client 20 and the application server 30 must have the same contents unless the communicated packet is lost on the communication path between the client 20 and the application server 30. If the communication logs for recording during the communication which are created by the client 20 and the application server 30 are different, there is a fear that a failure may have occurred on the network, or that one or both of the communication logs may be incorrect.

The field of the contents of communication data of the communication data information 586 can be filled with the contents of data communicated between the client 20 and the application server 30. By leaving the contents of the communication data in the communication log for recording during the communication, the client 20 and the application server 30 can leave evidence of the communication which includes the contents of the communication. However, if all the contents of the communication are recorded in the communication log, the amount of the communication log becomes enormous. Thus, it is realistic to record the contents of a designated part of the communication data. For example, it may be realistic to record the contents of the communication data destined to a specific communication destination address.

Stored as the log recording start/end times 587 are a start time of recording the communication log and an end time of recording the communication log. For example, the start time of recording the communication log may be a time when a communication is started between the client 20 and the application server 30 through the mediation of the session management server 40, and the end time of recording the communication log may be a time when a communication is ended therebetween through the mediation of the session management server 40.

Further, the communication log may be recorded, for example, each time any single packet is exchanged between the client 20 and the application server 30 (in this case, the start time of recording the log and the end time of recording the log are substantially the same).

Alternatively, the communication log may be created, for example, every predetermined time period (in this case, the communication log is created periodically so that the difference between the start time of recording the log and the end time of recording the log may always be a given time period). Note that if the log recording start/end times 587 are inaccurate, the legality of the communication log cannot be guaranteed. To create an accurate communication log, a time of a clock kept by each of the client 20 and the application server 30 needs to be accurate.

The information of FIG. 6 may include other information. Examples of the other information include information (such as a web, an email, or a file transfer method) which identifies an application performing a communication between the client 20 and the application server 30 and information (such as a URI) which indicates the place of an information resource existing on the Internet.

In addition, the communication source/communication destination information 583 of FIG. 6 may be information such as MAC addresses which identify the network apparatuses of the communication source and the communication destination. Further, the communication source/communication destination information 583 may include information such as "wireless LAN", "wired LAN", or "infrared communication" which specifies the type of the network apparatus itself.

Note that in order to distinguish types of communication logs, the communication log created and maintained by each of the client 20 and the application server 30 is called a communication apparatus log, while the communication log created and maintained by the session management server 40 may be called a session management log. Next, description will be made of an operation of a log management system having the above-mentioned configuration.

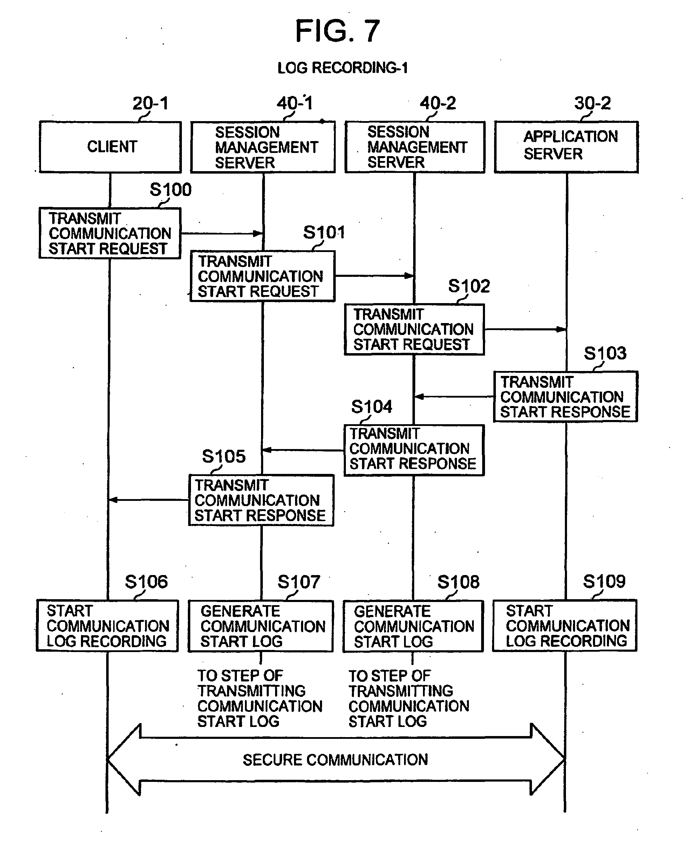

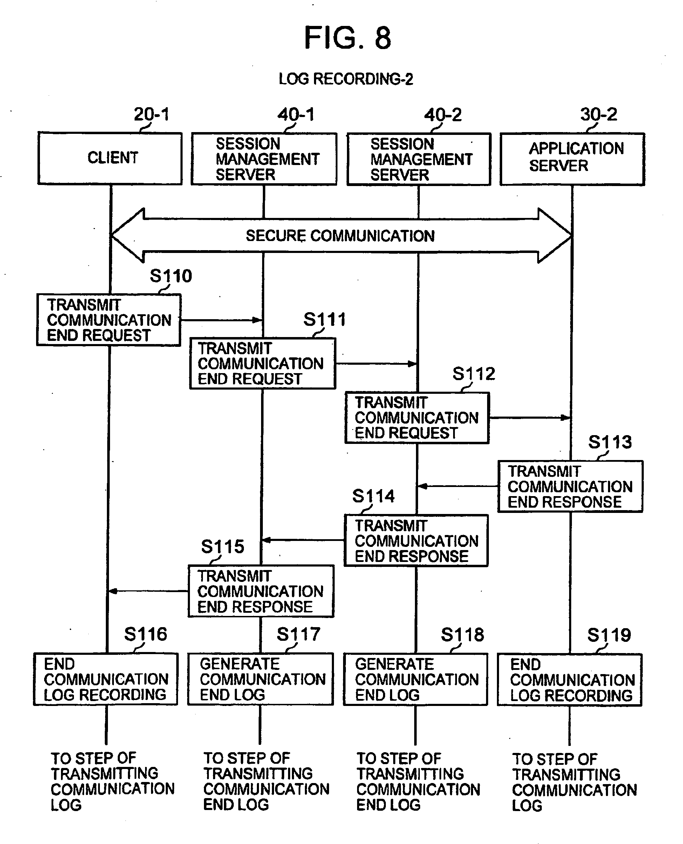

Referring to FIGS. 7 and 8, description will be made of an establishment of a secure communication path between the client 20 and the application server 30 through the mediation of the session management server 40 (communication start processing) and a deletion of the communication path (communication end processing), respectively, and creations of communication logs by the client 20, the application server 30, and the session management server 40.

As shown in FIG. 7, first, the client 20-1 performs authentication with respect to the application server 30-2 through the mediation of the session management servers 40-1 and 40-2, and establishes a secure communication path that does not pass the session management server 40-1 or 40-2.

The communication start/end processing section 23 of the client 20-1 transmits a communication start request to the session management server 40-1 via the secure communication section 21 with respect to the session management server, and the communication start/end forwarding processing section 41 of the session management server 40-1 receives the communication start request via the secure communication section 45 (S100).

The communication start/end forwarding processing section 41 of the session management server 40-1 forwards the received communication start request to the session management server 40-2 via the secure communication section 45, and the communication start/end forwarding processing section 41 of the session management server 40-2 receives the communication start request via the secure communication section 45 (S101).

The communication start/end forwarding processing section 41 of the session management server 40-2 forwards the received communication start request to the application server 30-2 via the secure communication section 45, and the communication start/end processing section 23 of the application server 30-2 receives the communication start request via the secure communication section 21 with respect to the session management server (S102).

Upon reception of the communication start request, the communication start/end processing section 23 of the application server 30-2 judges whether or not to accept the communication start request, and if the request is judged to be accepted, transmits a communication start response as a judgment result to the session management server 40-2 via the secure communication section 21 with respect to the session management server, while the communication start/end forwarding processing section 41 of the session management server 40-2 receives the communication start response via the secure communication section 45 (S103).

The communication start/end forwarding processing section 41 of the session management server 40-2 forwards the received communication start response to the session management server 40-1 via the secure communication section 45, and the communication start/end forwarding processing section 41 of the session management server 40-1 receives the communication start response via the secure communication section 45 (S104).

The communication start/end forwarding processing section 41 of the session management server 40-1 forwards the received communication start response to the client 20-1 via the secure communication section 45, and the communication start/end processing section 23 of the client 20-1 receives the communication start response via the secure communication section 21 with respect to the session management server (S105).

Note that the client 20-1 and the application server 30-2 use Steps S100 to S105 to share setting information and a key which are used for a secure communication performed between the client 20-1 and the application server 30-2, and each store the setting information and the key in the secure communication section 22.

The setting information and the key for a secure communication may be, for example, created by the client 20-1 and received by the application server 30-2, or created by the session management server and supplied to the client 20-1 and the application server 30-2.

If the communication start response received in Step S105 is to accept the communication start request, when a secure communication session is established, the communication log recording section 24 of the client 20-1 creates such a communication log for recording at the communication start as shown in FIG. 5, and also starts to record in a communication log for recording during the communication that is the secure communication session by starting to monitor communication data that passes the secure communication section 22 (S106).

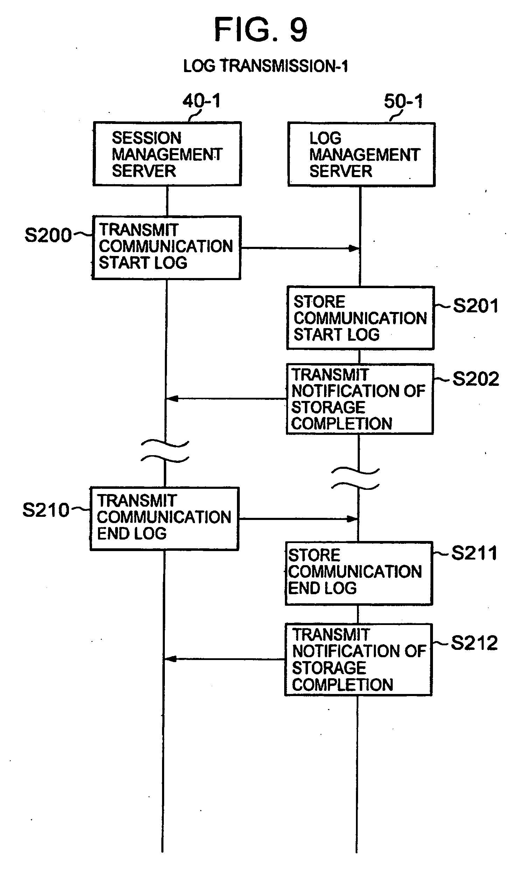

When Steps S101 and S105 are processed, the communication log recording section 42 of the session management server 40-1, which monitors the processing of the communication start/end forwarding processing section 41, creates such a communication log for recording at the communication start as shown in FIG. 5 (communication log with the communication start or end identification information 575 field filled in with communication start) (S107). After that, the communication log transmitting section 43 of the session management server 40-1 performs processing shown in FIG. 9 to transmit the communication log for recording at the communication start to the log management server 50-1 via the secure communication section 45.

In a similar manner, when Steps S102 and S104 are processed, the communication log recording section 42 of the session management server 40-2, which monitors the processing of the communication start/end forwarding processing section 41, creates such a communication log for recording at the communication start as shown in FIG. 5 (communication log with the communication start or end identification information 575 field filled in with communication start) (S108). After that, the communication log transmitting section 43 of the session management server 40-2 performs processing shown in FIG. 9 to transmit the communication log for recording at the communication start to the log management server 50-2 via the secure communication section 45.

After the communication start response that causes the establishment of the secure communication session is transmitted in Step S103, the communication log recording section 24 of the application server 30-2 creates such a communication log for recording at the communication start as shown in FIG. 5, and also starts to record in a communication log for recording during the communication that is the secure communication session by starting to monitor communication data that passes the secure communication section 22 (S109).

After that, the communication log recording section 24 of the client 20-1 and the communication log recording section 24 of the application server 30-2 each maintain the communication log shown in FIG. 6 for the secure communication established between the client 20-1 and the server 30-2.

As shown in FIG. 8, when the secure communication is to be ended, the client 20-1 and the application server 30-2 perform the communication end processing through the mediation of the session management server 40-1 and the session management server 40-2.

The communication start/endprocessing section 23 of the client 20-1 transmits a communication end request to the session management server 40-1 via the secure communication section 21 with respect to the session management server, and the communication start/end forwarding processing section 41 of the session management server 40-1 receives the communication end request via the secure communication section 45 (S110).

The communication start/end forwarding processing section 41 of the session management server 40-1 forwards the received communication end request to the session management server 40-2 via the secure communication section 45, and the communication start/end forwarding processing section 41 of the session management server 40-2 receives the communication end request via the secure communication section 45 (S111).

The communication start/end forwarding processing section 41 of the session management server 40-2 forwards the received communication end request to the application server 30-2 via the secure communication section 45, and the communication start/end processing section 23 of the application server 30-2 receives the communication end request via the secure communication section 21 with respect to the session management server (S112).

Upon reception of the communication end request, the communication start/end processing section 23 of the application server 30-2 transmits, a communication end response to the session management server 40-2 via the secure communication section 21 with respect to the session management server, while the communication start/end forwarding processing section 41 of the session management server 40-2 receives the communication end response via the secure communication section 45 (S113).

The communication start/end forwarding processing section 41 of the session management server 40-2 forwards the received communication end response to the session management server 40-1 via the secure communication section 45, and the communication start/end forwarding processing section 41 of the session management server 40-1 receives the communication end response via the secure communication section 45 (S114).

The communication start/end forwarding processing section 41 of the session management server 40-1 forwards the received communication end response to the client 20-1 via the secure communication section 45, and the communication start/endprocessing section 23 of the client 20-1 receives the communication end response via the secure communication section 21 with respect to the session management server (S115).

After transmission of the communication end response in Step S113, the application server 30-2 deletes the setting information and the key which are stored in the secure communication section 22 and which have been used for the secure communication between the client 20-1 and the application server 30-2. Upon reception of the communication end response in Step S115, the client 20-1 deletes the setting information and the key which are stored in the secure communication section 22 and which have been used for the secure communication between the client 20-1 and the application server 30-2. By this processing, the secure communication path that has been established between the client 20-1 and the application server 30-2 is deleted (secure communication session is ended).

After the communication end response is received in Step S115, the communication log recording section 24 of the client 20-1 ends the recording of the communication log for recording during the communication, which is started in Step S106, and also creates a communication log for recording at the communication end (with the communication start or end identification information 575 field filled in with communication end) (S116). In this step, the communication log recording section 24 of the client 20-1 is temporarily storing the communication log for recording during the communication and the communication log for recording at the communication end.

In a similar manner, after the communication end response is transmitted in Step S113, the communication log recording section 24 of the application server 30-2 ends the recording of the communication log for recording during the communication, which is started in Step S109, and also creates a communication log for recording at the communication end (with the communication start or end identification information 575 field filled in with communication end) (S119). In this step, the communication log recording section 24 of the application server 30-2 is temporarily storing the communication log for recording during the communication and the communication log for recording at the communication end.

After the communication end response is transmitted in Step S115, the communication log recording section 42 of the session management server 40-1 creates a communication log for recording at the communication end (with the communication start or end identification information 575 field filled in with communication end) corresponding to Step S107 (S117). In this step, the communication log recording section 42 of the session management server 40-1 is temporarily storing the communication log for recording at the end of the communication that is the secure communication session shown in FIGS. 7 and 8.

In a similar manner, after the communication end response is transmitted in Step S114, the communication log recording section 42 of the session management server 40-2 creates a communication log for recording at the communication end (with the communication start or end identification information 575 field filled in with communication end) corresponding to Step S108 (S118). In this step, the communication log recording section 42 of the session management server 40-2 is temporarily storing the communication log for recording at the end of the communication that is the secure communication session shown in FIGS. 7 and 8.

Note that the communication log recording section 24 of the client 20-1 may employ another method other than to start and end the recording of the communication log for recording during the communication that lasts from the communication start until the communication end in Steps S106 and 116, respectively.

For example, the client 20-1 can generate a communication log for recording during the communication repeatedly (e.g., periodically at each predetermined period) without performing Steps S106 and S116. In this case, if any secure communication occurs in a predetermined period, the communication log recording section 24 of the client 20-1 creates a communication log for recording during the communication for the secure communication, and if the secure communication is not performed, creates an empty communication log for recording during the communication or creates no such communication log. Similar processing can be performed by the application server 30-2.

In addition, the communication log recording section 24 of the client 20-1 and the communication log recording section 24 of the application server 30-2 may create and maintain communication logs for a communication performed via a communication path other than that used in the communication session established by the processing of FIG. 7.

For example, without performing a series of Steps starting from Step S100, the client 20-1 may use periodic communication log recording to create a communication log for recording during the communication that is a communication with respect to the application server 30-1, which has been established without the mediation of the session management server 40. In this case, the flag 585 indicating whether or not the communication is encrypted may be filled in with information that distinguishes between the communication using the secure communication path established by the processing of FIG. 7 and a communication which uses a path other than the secure communication path and which is not mediated by the session management server 40.

FIG. 9 is a sequence diagram of processing in which the session management server 40-1 transmits to the log management server 50-1 the communication logs for recording at the communication start/end which are created in Steps S107 and S117, respectively.

After the communication log for recording at the communication start of FIG. 5 (with the communication start or end identification information 575 field filled in with communication start) has been created in Step S107, the communication log transmitting section 43 of the session management server 40-1 transmits the communication log to the log management server 50-1 via the secure communication section 45, and the communication log management section 56 of the log management server 50-1 receives the communication log via the secure communication section 51 (S200).

The communication log management section 56 of the log management server 50-1 stores the received communication log for recording at the communication start in the communication log 57 (S201). The communication log management section 56 then transmits a notification of storage completion to the session management server 40-1 via the secure communication section 51, and the communication log transmitting section 43 of the session management server 40-1 receives the notification via the secure communication section 45 (S202).

After the communication log for recording at the communication end of FIG. 5 (with the communication start or end identification information 575 field filled in with communication end) has been created in Step S117, the communication log transmitting section 43 of the session management server 40-1 transmits the communication log to the log management server 50-1 via the secure communication section 45, and the communication log management section 56 of the log management server 50-1 receives the communication log via the secure communication section 51 (S210).

The communication log management section 56 of the log management server 50-1 stores the received communication log for recording at the communication end in the communication log 57 (S211). The communication log management section 56 then transmits a notification of storage completion to the session management server 40-1 via the secure communication section 51, and the communication log transmitting section 43 of the session management server 40-1 receives the notification via the secure communication section 45 (S212).

The session management server 40-1 shown in FIG. 9 has been described above as transmitting the communication log each time the communication log for recording at the communication start or end is created in Step S107 or S117, but may transmit a plurality of communication logs for recording at the communication start and end at another timing, for example, collectively on a periodic basis, to the log management server 50-1.

Similar processing is performed in a case where the session management server 40-2 transmits the communication log for recording at the communication start or end to the log management server 50-2.

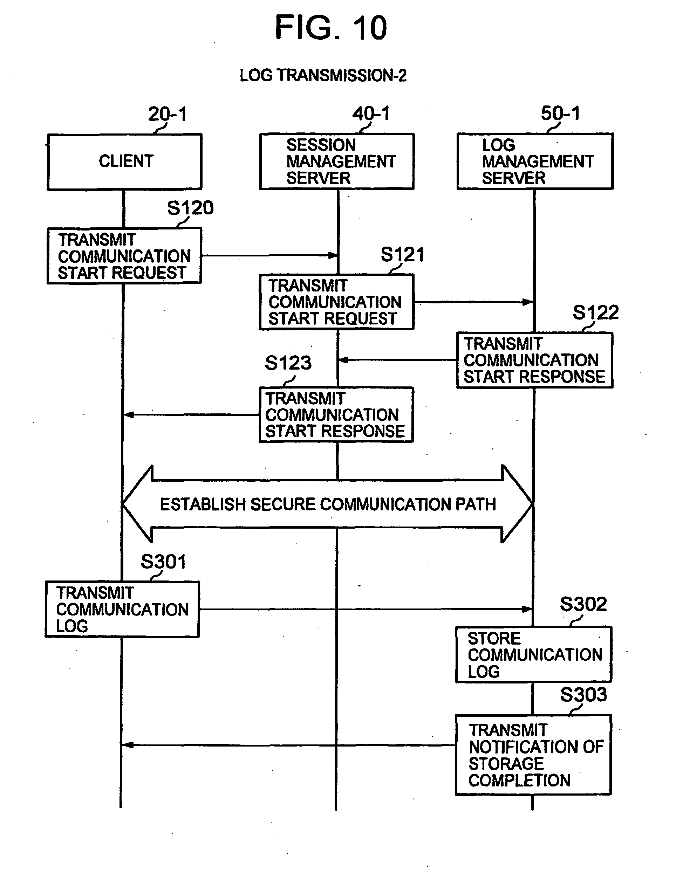

FIG. 10 is a diagram showing a processing sequence in which the client 20-1 transmits the communication log for recording at the communication start, at the communication end, or during the communication which is created and maintained by the communication log recording section 24 of the client 20-1, to the log management server 50-1.

After ending the communication log recording in Step S116, the client 20-1 performs the processes of Steps S120 to S123 to perform authentication with respect to the log management server 50-1 through the mediation of the session management server 40-1, and establish a secure communication path which does not pass the session management server 40-1, and then transmits the communication log via the established communication path.

To be specific, the client 20-1 transmits a communication start request to the log management server 50-1 via the session management server 40-1 (S120 and S121). The log management server 50-1 transmits a response to the client 20-1 via the session management server 40-1 (S122 and S123). Those steps are similar to the steps of the communication start processing of FIG. 7. The client 20-1 and the log management server 50-1 each perform authentication with respect to the session management server 40-1 as necessary.

The communication log transmitting section 25 of the client 20-1 uses the secure communication path established in Steps S120 to S123 to transmit the communication log which is temporarily stored by the communication log recording section 24 to the log management server 50-1 via the secure communication section 22, and the communication log management section 56 of the log management server 50-1 receives the communication log via the secure communication section 52 (S301).

The communication log management section 56 of the log management server 50-1 stores in the communication log 58 the received communication log for recording at the communication start, at the communication end, or during the communication (S302) The communication log management section 56 transmits a notification of storage completion to the client 20-1 via the secure communication section 52, and the communication log transmitting section 25 of the client 20-1 receives the notification via the secure communication section 22 (S303).

In the processing of FIG. 10, Steps S120 to S123 is performed to establish the secure communication path, and the established secure communication path is used to transmit the communication log. However, in a case where the secure communication path has already been established between the client 20-1 and the log management server 50-1, Steps S120 to S123 may be omitted.

Similar processing to that of FIG. 10 is also performed in a case where the application server 30-1 transmits the communication log to the log management server 50-1, a case where the client 20-2 transmits the communication log to the log management server 50-2, or a case where the application server 30-2 transmits the communication log to the log management server 50-2.

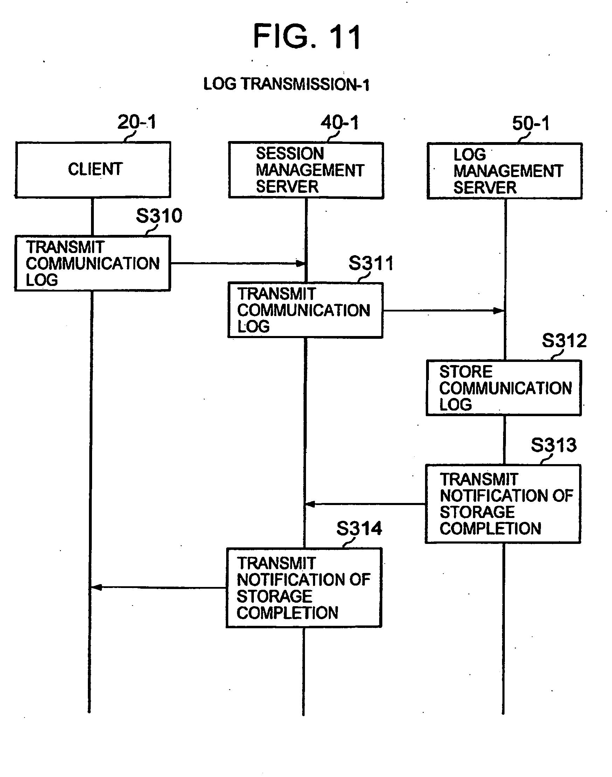

FIG. 11 is a sequence diagram showing another communication log transmitting method alternative to that of FIG. 10, and shows a sequence in which the client 20-1 transmits the communication log to the log management server 50-1 via the session management server 40-1.

The communication log transmitting section 25 of the client 20-1 transmits the communication log to the session management server 40-1 via the secure communication section 21, and the forwarding processing section 44 of the session management server 40-1 receives the communication log via the secure communication section 45 (S310).

The forwarding processing section 44 of the session management server 40-1 forwards the received communication log to the log management server 50-1 via the secure communication section 45, and the communication log management section 56 of the log management server 50-1 receives the communication log via the secure communication section 51 (S311).

The communication log management section 56 of the log management server 50-1 stores in the communication log 58 the received communication log for recording at the communication start, at the communication end, or during the communication (S312). The communication log management section 56 transmits a notification of storage completion to the session management server 40-1 via the secure communication section 51, and the forwarding processing section 44 of the session management server 40-1 receives the notification via the secure communication section 45 (S313).

The forwarding processing section 44 of the session management server 40-1 forwards the received notification of storage completion to the client 20-1 via the secure communication section 45, and the communication log transmitting section 25 of the client 20-1 receives the notification via the secure communication section 21 with respect to the session management server (S314).

Note that the apparatuses exchange data shown in FIG. 11 in the form of message transmission/reception by using the secure communication paths (encrypted communication paths) established in the following ranges (1) and (2) (to be specific, if a given secure communication path has already been established, by using the given secure communication path, and if no secure communication path has been established yet, by establishing a new secure communication path).
(1) between the client 20-1 and the session management server 40-1
(2) between the session management server 40-1 and the log management server 50-1.

Further, the following exchange steps (a) and (b) between the apparatuses in the example of FIG. 11 can be performed by, for example, using the above-mentioned secure communication paths to transmit data as a session initiation protocol (SIP) message.
(a) transmit a communication log (S310 and S311)
(b) transmit a notification of storage completion (S313 and S314)

Similar processing to that of FIG. 11 is performed in a case where the application server 30-1 transmits the communication log to the log management server 50-1, a case where the client 20-2 transmits the communication log to the log management server 50-2, or a case where the application server 30-2 transmits the communication log to the log management server 50-2.

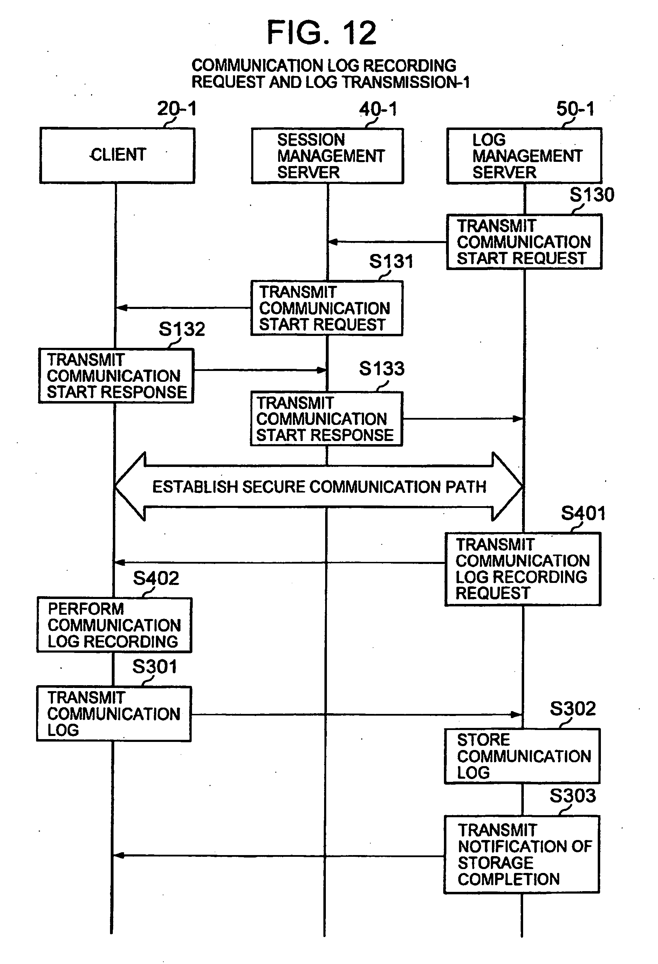

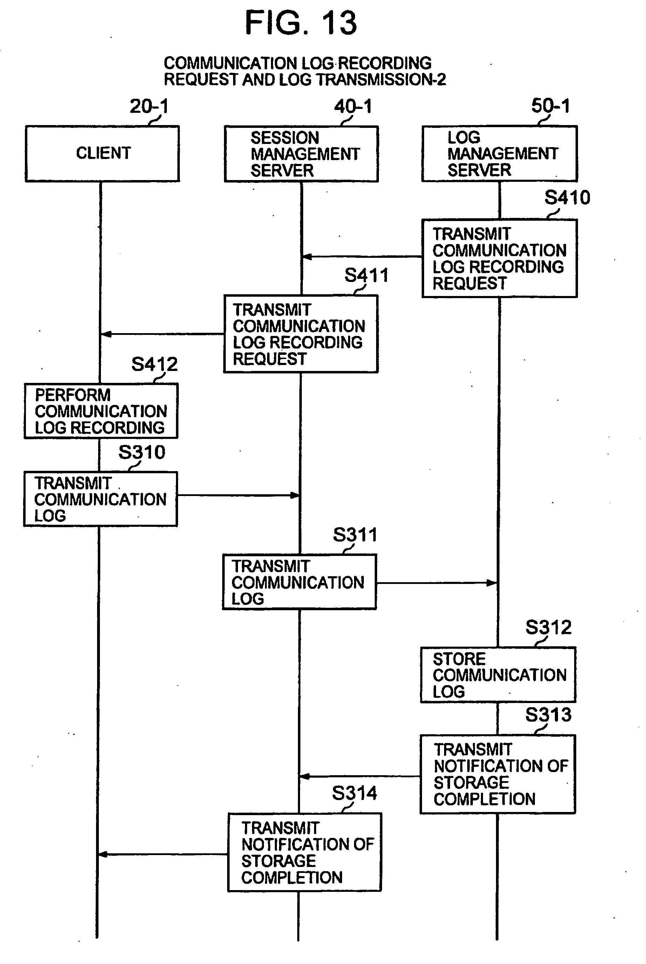

In the sequences of FIGS. 7 and 8, FIG. 10, or FIG. 11, the client 20-1 creates a communication log with the establishment of a communication session as a trigger, and transmits the communication log to the log management server 50. As shown in the sequence diagrams of FIGS. 12 and 13, an alternative method may be taken to cause the client 20-1, the application server 30-1, the client 20-2, and the application server 30-2 to create a communication log in response to a communication log recording request instructed by the log management server 50, and to transmit the communication log to the log management server 50.

In Step S401 of transmitting a communication log recording request shown in FIG. 12, the log management server 50 can designate contents to be recorded in the communication log in detail. For example, by designating the contents of the communication source/communication destination information 583 and the communication destination URL 584 of an established communication session, the log management server 50 can instruct creation of a communication log of a communication with respect to a specific communication destination.

In another example, by designating the contents of the log recording start/end times 587, the log management server 50 can designate a period during which the communication log for recording during the communication is to be maintained.

In yet another example, by designating the contents of communication data included in the communication data information 586, the log management server 50 can instruct recording of even the actual communication data.

Such processing of transmitting the communication log recording request and transmitting the communication log as shown in FIGS. 12 and FIG. 13 allow the log management server 50 to instruct each of the client 20 and the application server 30 to create a necessary communication log for recording during the communication at an arbitrary timing.

For example, in a case where another apparatus which is monitoring a communication notifies the log management server 50-1 of the need for detailed examination of a communication with respect to a specific communication source and a specific communication destination, the log management server 50-1 instructs the client 20 or the application server 30 to perform the communication log recording in detail starting from the time point by the processing of FIG. 12 or 13. Accordingly, the log management server 50-1 can obtain the detailed communication log of the communication.

In a case where the log management server 50 requests the client 20 and the application server 30 to perform the communication log recording, the processing of FIG. 12 or 13 is performed in this system. Hereinafter, description will be made of each of the processing.

FIG. 12 shows a sequence in which the log management server 50-1 requests the client 20-1 to create and maintain the communication log for recording during the communication.

The log management server 50-1 performs Steps S130 to S133 to perform authentication with respect to the client 20-1 through the mediation of the session management server 40-1, and establish a secure communication path which does not pass the sessionmanagement server 40-1, and then requests the client 20-1 to create and maintain the communication log for recording during the communication via the established secure communication path.

The log management server 50-1 transmits a communication start request to the client 20-1 via the session management server 40-1 (S130 and S131). The client 20-1 transmits a response to the log management server 50-1 via the session management server 40-1 (S132 and S133). Those steps are similar to the steps of the communication start processing of FIG. 7.

The communication log recording requesting section 54 of the log management server 50-1 uses the secure communication path established in Steps S130 to S133 to transmit a communication log recording request to the client 20-1 via the secure communication section 52, and the communication log recording section 24 of the client 20-1 receives the communication log recording request via the secure communication section 22 (S401).

The communication log recording section 24 of the client 20-1 starts to record in a communication log for recording during the communication in response to the communication log recording request of Step S401 (S402). After the communication session ends, in Steps S301 to S303, which are similar to the equivalent steps of FIG. 10, the client 20-1 transmits the communication log to the log management server 50-1, and the log management server 50-1 stores the received communication log.

FIG. 13 shows another sequence in which the log management server 50-1 requests the client 20-1 to create and maintain the communication log for recording during the communication.

The communication log recording requesting section 54 of the log management server 50-1 transmits the communication log recording request for a communication log for recording during the communication to the session management server 40-1 via the secure communication section 52, and the forwarding processing section 44 of the session management server 40-1 receives the communication log recording request via the secure communication section 45 (S410) .

The forwarding processing section 44 of the session management server 40-1 forwards the received communication log recording request to the client 20-1 via the secure communication section 45, and the communication log recording section 24 of the client 20-1 receives the communication log recording request via the secure communication section 21 with respect to the session management server (S411).

The communication log recording section 24 of the client 20-1 starts to record in a communication log for recording during the communication in response to the communication log recording request of Steps S410 and S411 (S412). After the communication session ends, in Steps S310 to S314, which are similar to the equivalent steps of FIG. 11, the client 20-1 transmits the communication log to the log management server 50-1, and the log management server 50-1 stores the received communication log.

Note that the apparatuses exchange data shown in FIG. 13 in the form of message transmission/reception by using the secure communication paths (encrypted communication paths) established in the following ranges (1) and (2) (to be specific, if a given secure communication path has already been established, by using the given secure communication path, and if no secure communication path has been established yet, by establishing a new secure communication path).
(1) between the client 20-1 and the session management server 40-1
(2) between the session management server 40-1 and the log management server 50-1

Further, the following exchange steps (a) to (c) between the apparatuses in the example of FIG. 13 can be performed by, for example, using the above-mentioned secure communication paths to transmit data as a session initiation protocol (SIP) message.
(a) transmit a communication log recording request (S410 and S411)
(b) transmit a communication log (S310 and S311)
(c) transmit a notification of storage completion (S313 and S314)

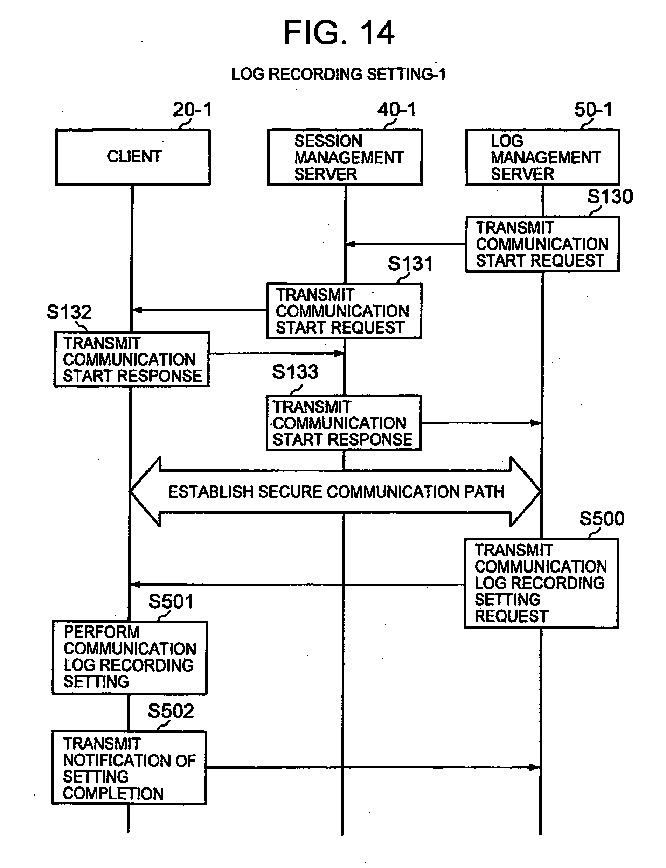

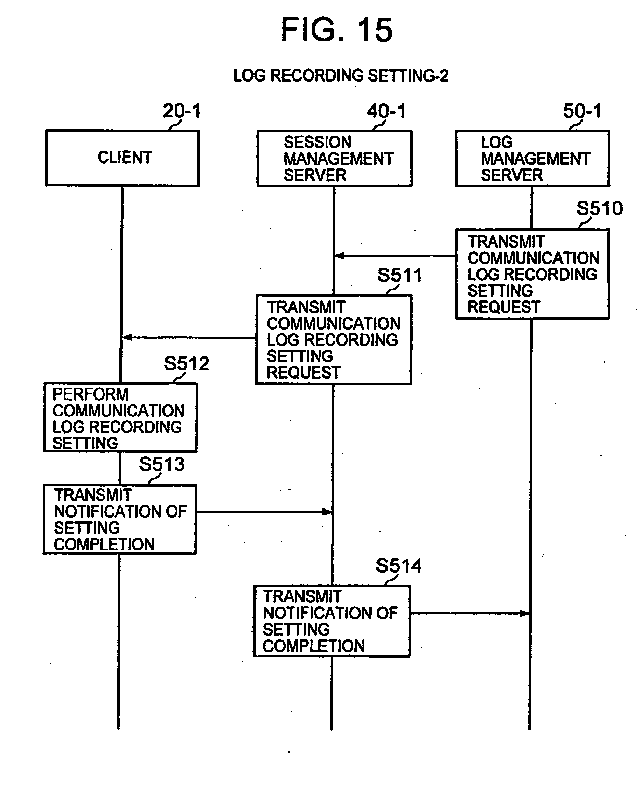

FIGS. 14 and 15 show sequences in which the log management server 50-1 performs communication log recording setting on the client 20-1. The term "communication log recording setting" relates to the recording in the communication logs shown in FIGS. 5 and 6, and represents making such a setting that the recording target is limited to part of the communication or setting whether or not even the contents of communication data included in communication data information 586 are to be recorded.

Hereinafter, description will be made of specific examples of the communication log recording settings.

For example, by setting the communication source/communication destination information 573 and 583 and the communication destination URLs 574 and 584 so as to create and maintain a communication log of a communication with respect to a specific communication source and a specific communication destination, the log management server 50 can create and maintain the communication log of the communication with respect to the specific communication source and the specific communication destination. That is, an unnecessary communication log is neither created nor transmitted, which makes it possible to save memory and communication traffic.

In addition, for example, by setting the communication source/communication destination information 573 and 583 and the communication destination URLs 574 and 584 so as not to create or maintain a communication log of a communication with respect to a specific communication source and a specific communication destination, the log management server 50 can exclude the recording of the communication log of the communication with respect to the specific communication source and the specific communication destination. As an example, such use as to save memory and communication traffic is possibly available by excluding the recording of the communication log of the communication with respect to a DNS server or the communication log of the communication with respect to a server which provides virus definition files.

Further, for example, it is possible to designate a period during which the communication log is to be maintained. As an example, to monitor a communication which should be performed at the same time every day, it is possible to designate a period for the communication.

Further, for example, it is possible to designate one or both of a specific communication source and a specific communication destination, and to specify regarding a relevant communication whether or not contents of communication data included in communication data information 586 are to be recorded. In this case, it is possible to make such a setting as to create and maintain a further detailed communication log (communication log containing contents of a communication) with regard to a specific communication.

Hereinafter, description will be made of the processing of FIGS. 14 and 15.

FIG. 14 shows a sequence in which the log management server 50-1 establishes an encrypted communication path with respect to the client 20-1 and causes the client 20-1 to make a setting for the communication log recording.

The log management server 50-1 transmits a communication start request to the client 20-1 via the session management server 40-1 (S130 and S131). The client 20-1 transmits a response to the log management server 50-1 via the session management server 40-1 (S132 and S133). Those steps are similar to the equivalent steps of FIG. 12.

The communication log recording setting requesting section 53 of the log management server 50-1 uses the secure communication path established in Steps S130 to S133 to transmit a communication log recording setting request to the client 20-1 via the secure communication section 52, and the communication log recording section 24 of the client 20-1 receives the communication log recording setting request via the secure communication section 22 (S500).

The communication log recording section 24 of the client 20-1 makes a setting for the communication log recording in response to the communication log recording setting request of Step S500 (S501). Note that details relating to the communication log recording setting of Step S501 are as described above.

The communication log recording section 24 of the client 20-1 transmits a notification of setting completion to the log management server 50-1 via the secure communication section 22, and the communication log recording setting requesting section 53 of the log management server 50-1 receives the notification (S502).

If the processing of FIGS. 7 and 8 are performed after this step, with regard to a secure communication performed after this processing, the client 20-1 creates and maintains a communication log thereof according to the settings made in Step S501.

FIG. 15 shows another sequence in which the log management server 50-1 causes the client 20-1 to make a setting for the communication log recording.

The communication log recording setting requesting section 53 of the log management server 50-1 transmits the communication log recording setting request to the session management server 40-1 via the secure communication section 51, and the forwarding processing section 44 of the session management server 40-1 receives the communication log recording setting request via the secure communication section 45 (S510).

The forwarding processing section 44 of the session management server 40-1 forwards the received communication log recording setting request to the client 20-1 via the secure communication section 45, and the communication log recording section 24 of the client 20-1 receives the communication log recording setting request via the secure communication section 21 with respect to the session management server (S511).

The communication log recording section 24 of the client 20-1 makes a setting for the communication log recording in response to the communication log recording setting request of Step S510 (S512). Note that details relating to the communication log recording setting of Step S510 are as described above.

The communication log recording section 24 of the client 20-1 transmits a notification of setting completion to the session management server 40-1 via the secure communication section 21 with respect to the session management server, and the forwarding processing section 44 of the session management server 40-1 receives the notification (S513).

The forwarding processing section 44 of the session management server 40-1 forwards the notification of setting completion to the log management server 50-1 via the secure communication section 45, and the communication log recording setting requesting section 53 of the log management server 50-1 receives the notification (S514).

Note that the apparatuses exchange data shown in FIG. 15 in the form of message transmission/reception by using the secure communication paths (encrypted communication paths) established in the following ranges (1) and (2) (to be specific, if a given secure communication path has already been established, by using the given secure communication path, and if no secure communication path has been established yet, by establishing a new secure communication path).
(1) between the client 20-1 and the session management server 40-1
(2) between the session management server 40-1 and the log management server 50-1

Further, the following exchange steps (a) and (b) between the apparatuses in the example of FIG. 15 can be performed by, for example, using the above-mentioned secure communication paths to transmit data as a session initiation protocol (SIP) message.
(a) transmit a communication log recording setting request (S510 and S511)
(b) transmit a notification of setting completion (S513 and S514)

If the processing of FIGS. 7 and 8 are performed after this step, with regard to a secure communication performed after this processing, the client 20-1 creates and maintains a communication log thereof according to the settings made in Step S512.

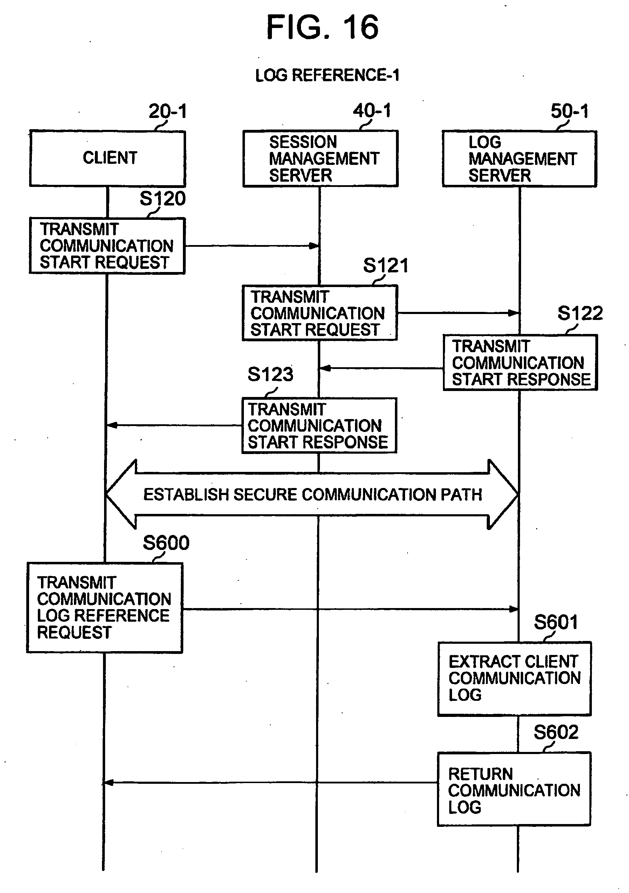

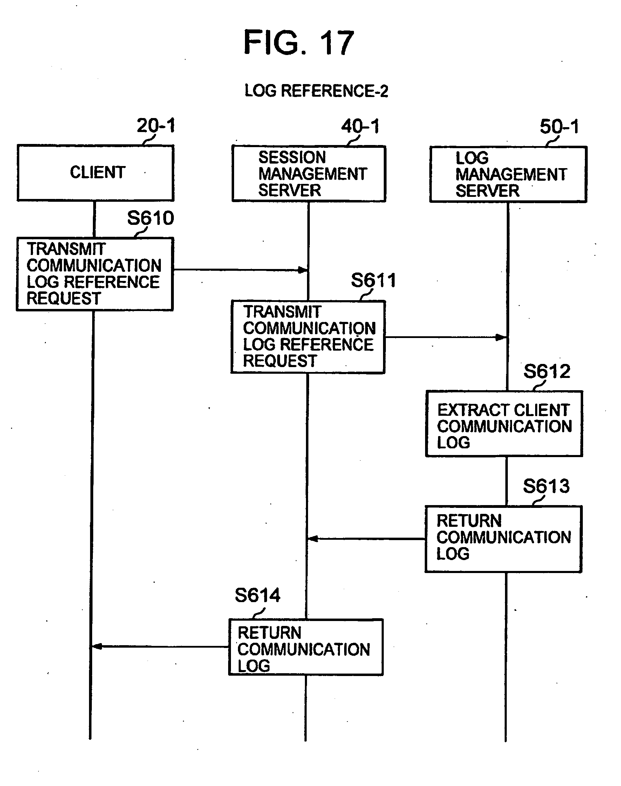

FIGS. 16 and 17 show sequences in which the client 20-1 requests the log management server 50-1 to allow reference to the communication log of the client 20-1 itself. The client 20-1 does not store its own created communication log after transmission thereof to the log management server 50, while the log management server 50-1 stores the communication log for a long term period.

By the sequences shown in FIGS. 16 and 17, the client 20-1 can reference a history of past communications performed by the client 20-1 itself.

The log management server 50-1 also stores the communication log created by the session management server 40, and the client 20-1 can reference the communication log as well.

Note that by making appropriate authorization settings on the communication log 57 and the communication log 58 of the log management server 50-1, the client 20-1 may be configured to reference a communication log created by another client 20 and a communication log created by another log management server 50 which are stored in the log management server 50-1.

Hereinafter, description will be made of the processing of FIGS. 16 and 17.

FIG. 16 shows a sequence in which the client 20-1 establishes an encrypted communication path with respect to the log management server 50-1 and references the communication log stored in the log management server 50-1.

The client 20-1 transmits a communication start request to log management server 50-1 via the session management server 40-1 (S120 and S121). The log management server 50-1 transmits a response to the client 20-1 via the session management server 40-1 (S122 and S123). Those steps are similar to the equivalent steps of FIG. 10.

The communication log reference requesting section 26 of the client 20-1 uses the secure communication path established in Steps S120 to S123 to transmit a communication log reference request to the log management server 50-1 via the secure communication section 52, and the communication log management section 56 of the log management server 50-1 receives the communication log reference request via the secure communication section 52 (S600).

The communication log management section 56 of the log management server 50-1 extracts the communication log corresponding to the communication log reference request of Step S600 from the communication log 57 or 58 (S601).

The communication log management section 56 of the log management server 50-1 transmits the extracted communication log to the client 20-1 via the secure communication section 52, and the communication log reference requesting section 26 of the client 20-1 receives the communication log (S602).

FIG. 17 shows another sequence in which the client 20-1 references the communication log stored in the log management server 50-1.

The communication log reference requesting section 26 of the client 20-1 transmits the communication log reference request to the session management server 40-1 via the secure communication section 21 with respect to the session management server, and the forwarding processing section 44 of the session management server 40-1 receives the communication log reference request via the secure communication section 45 (S610).

The forwarding processing section 44 of the session management server 40-1 forwards the received communication log reference request to the log management server 50-1 via the secure communication section 45, and the communication log management section 56 of the log management server 50-1 receives the communication log reference request via the secure communication section 51 with respect to the session management server (S611).

The communication log management section 56 of the log management server 50-1 extracts the communication log corresponding to the communication log reference request of Step S610 from the communication log 57 or 58 (S612).

The communication log management section 56 of the log management server 50-1 transmits the extracted communication log to the session management server 40-1 via the secure communication section 51, and the forwarding processing section 44 of the session management server 40-1 receives the communication log (S613).

The forwarding processing section 44 of the session management server 40-1 forwards the received communication log to the client 20-1 via the secure communication section 45, and the communication log reference requesting section 26 of the client 20-1 receives the communication log (S614).

Note that the apparatuses exchange data shown in FIG. 17 in the form of message transmission/reception by using the secure communication paths (encrypted communication paths) established in the following ranges (1) and (2) (to be specific, if a given secure communication path has already been established, by using the given secure communication path, and if no secure communication path has been established yet, by establishing a new secure communication path).
(1) between the client 20-1 and the session management server 40-1
(2) between the session management server 40-1 and the log management server 50-1

Further, the following exchange steps (a) and (b) between the apparatuses in the example of FIG. 17 can be performed by, for example, using the above-mentioned secure communication paths to transmit data as a session initiation protocol (SIP) message.
(a) transmit a communication log reference request (S610 and S611)
(b) return a communication log (S613 and S614)

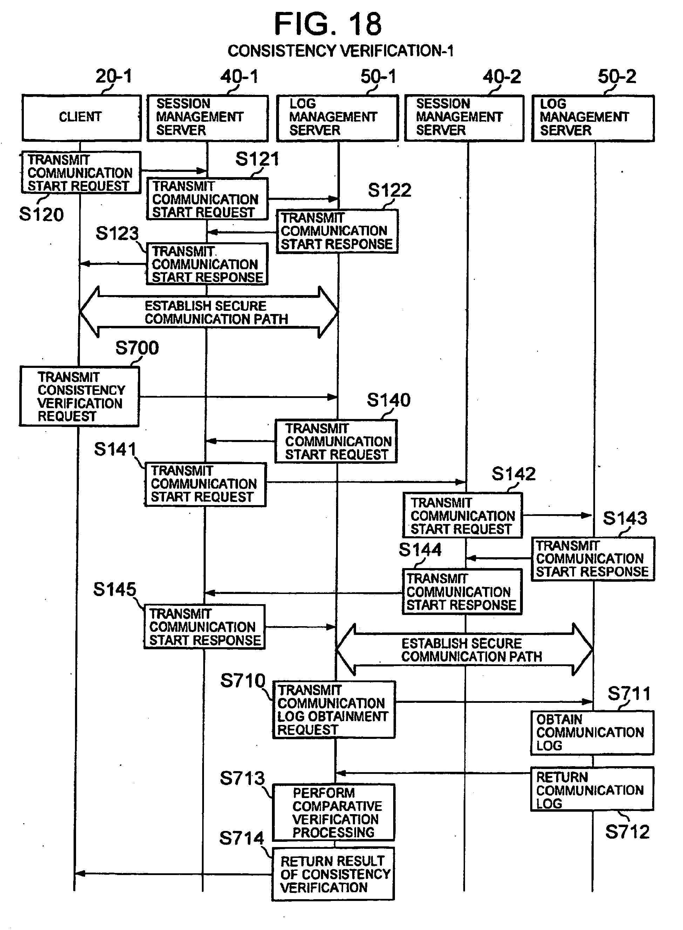

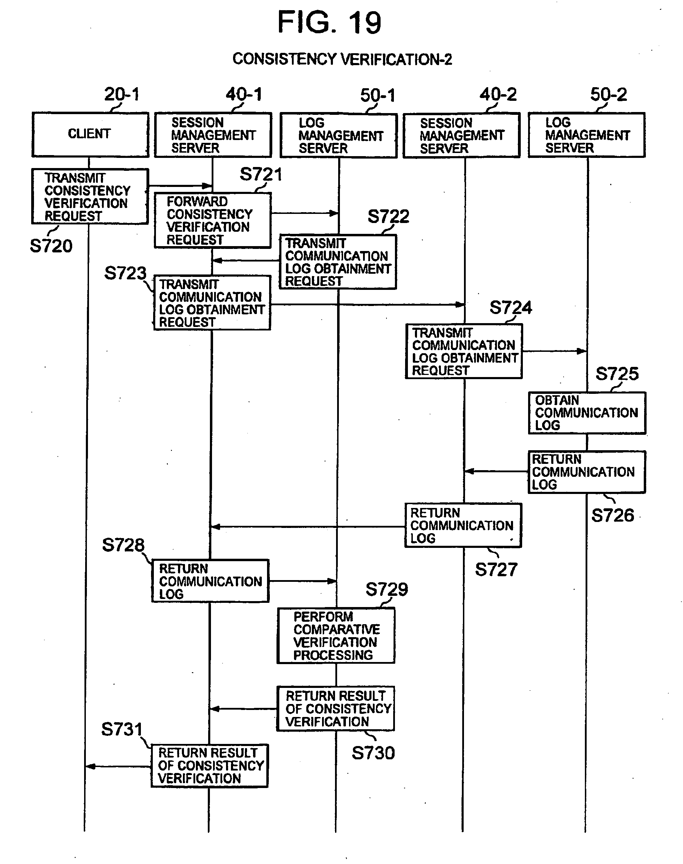

Next, description will be made of the processing of FIGS. 18 and 19.

As shown in FIGS. 7 and 8, when the client 20-1 performs a communication with the application server 30-2, the client 20-1 and the application server 30-2 each create the communication log for recording during the communication (S106, S109, S116, and S119), and the session management server 40-1 and the session management server 40-2 each create the communication log for recording at the communication start and the communication log for recording at the communication end (S107, S108, S117, and S118).

The communication log created and maintained by the session management server 40-1 is transmitted from the session management server 40-1 to the log management server 50-1 by the processing of FIG. 9. The communication log created and maintained by the session management server 40-2 is also transmitted from the session management server 40-2 to the log management server 50-2 by similar processing to that of FIG. 9.

Further, the communication log created and maintained by the client 20-1 is transmitted to the log management server 50-1 by the processing of FIG. 10 or 11. The communication log created and maintained by the application server 30-2 is also transmitted to the log management server 50-2 by similar processing to that of FIG. 10 or 11 (processing with the client 20-1 and the log management server 50-1 of FIG. 10 and FIG. 11 substituted by the application server 30-2 and the log management server 50-2, respectively).

In this manner, for a communication performed from the client 20-1 to the application server 30-2, the log management server 50-1 stores the communication logs obtained from the client 20-1 and the session management server 40-1, and the log management server 50-2 stores the communication logs obtained from the application server 30-2 and the session management server 40-2. In other words, for a communication performed between the client 20 and the application server 30 across a plurality of domains, the communication logs are distributed to and stored in the log management servers of the respective domains. If it is confirmed that there is consistency among those distributed communication logs, it can also be confirmed that the whole communication logs are reliable.

FIG. 18 is a sequence diagram showing processing which verifies consistency between the communication logs stored in the log management servers 50-1 and 50-2. FIG. 19 shows another sequence alternative to that of FIG. 18.

FIGS. 18 and 19 show sequences relating to the communication between the client 20-1 and the application server 30-2, in which if the client 20-1 requests the log management server 50-1 of its own domain A to perform consistency verification between the communication logs of the communication, the log management server 50-1 obtains a necessary communication log from the log management server 50-2 of another domain B, performs comparative verification (S713 or S729) to thereby perform the consistency verification, and returns a result thereof to the client 20-1.

Note that FIGS. 18 and 19 illustrates an example in which the client 20-1 requests the log management server 50-1 of the own domain A to perform the consistency verification of the communication logs, but instead of the client 20-1, another communication apparatus may request the consistency verification of the communication logs. In this case, the processing may be performed by substituting the client 20-1 of FIGS. 18 and 19 with the other communication apparatus.

Hereinafter, description will be made of the sequence of FIG. 18.

FIG. 18 shows the following processing.
(1) The client 20-1 establishes a secure communication path with respect to the log management server 50-1 through the mediation of the session management server 40-1 (S120 to S123).
(2) The client 20-1 uses the secure communication path established in the processing (1) to request the log management server 50-1 to perform consistency verification (S700).
(3) The log management server 50-1 establishes a secure communication path with respect to the log management server 50-2 through the mediation of the session management server 40-1 and the session management server 40-2 (S140 to S145).
(4) The log management server 50-1 uses the secure communication path established in the processing (3) to obtain the communication log from the log management server 50-2 (S710 to S712).
(5) The log management server 50-1 performs comparative verification between the communication log stored in the log management server 50-1 itself and the communication log which is stored in the log management server 50-2 and obtained in the processing (4) (S713), and returns the result of the verification to the client 20-1 (S714) .

The consistency verification performed in Step S713 represents judging whether or not the contents of a plurality of logs that are separately generated are consistent with each other. The confirmation of the consistency can infer that the communication logs are more accurate. The "consistent communication log" can be used, for example, to prove a fact that a communication has been performed (or not been performed) in a case where a request for confirmation of the fact of the communication is made to a company by a third party outside the company.

Next, detailed description will be made of the above-mentioned processing (1) to (5).
(1) In a similar manner to Steps S120 to S123 of FIG. 10, a secure communication path is established between the client 20-1 and the log management server 50-1.
(2) The consistency verification requesting section 27 of the client 20-1 transmits a consistency verification request to the log management server 50-1 via the secure communication section 22 (S700).
(3) The log management server 50-1 transmits a communication start request to the log management server 50-2 via the session management server 40-1 and the session management server 40-2 (S140 to S142), and the log management server 50-2 transmits a response to the log management server 50-1 via the session management server 40-2 and the session management server 40-1 (S143 to S145). This processing establishes a secure communication path between the log management server 50-1 and the log management server 50-2.
(4) The log management server 50-1 transmits a request to the log management server 50-2 for communication logs of a communication performed between the client 20-1 and the application server 30-2 which is necessary to respond to the consistency verification request of the processing (2) (S710). The logmanagement server 50-2 extracts the requested communication log (S711), and returns the communication log to the log management server 50-1 (S712).
(5) The log management server 50-1 performs comparative verification between the communication log received from the log management server 50-2, which is necessary for the consistency verification, and the communication log stored in the log management server 50-1 itself (S713).

In a comparative verification processing of Step S713, specifically, it is judged whether or not the communication logs of the communication performed between the client 20-1 and the application server 30-2 (contents shown in FIGS. 5 and 6) are consistent with each other. The result of the comparative verification processing of Step S713 may be represented by a value of a degree of consistency, and may also be represented by an extracted inconsistent portion if inconsistency is found.

The log management server 50-1 uses the secure communication path established in Steps S120 to S123 to transmit the result of comparative verification processing of Step S713 to the client 20-1 (S714).

In the comparative verification processing of Step S713 between the communication logs for recording at the communication start or between the communication logs at the communication end, there exist, for example, 4 kinds of communication logs having such a format as shown in FIG. 5 which are created at the start or end of the communication performed from the client 20-1 to the application server 30-2, that is, (1) a communication log created by the client 20-1 (with the communication source ID being the ID of the client 20-1 and with the communication destination ID being the ID of the application server 30-2), (2) a communication log created by the session management server 40-1 (with the communication source ID being the ID of the client 20-1 and with the communication destination ID being the ID of the application server 30-2), (3) a communication log created by the session management server 40-2 (with the communication source ID being the ID of the client 20-1 and with the communication destination ID being the ID of the application server 30-2), and (4) a communication log created by the application server 30-2 (with the communication source ID being the ID of the application server 30-2 and with the communication destination ID being the ID of the client 20-1). The 4 kinds of communication logs can be judged as being consistent with one another in a case where the communication logs have: the same communication source address and communication source port number; the same communication destination address and communication destination port number; the same communication destination URL if the communication destination URL information exists; and the same time information (or time information having a difference within a predetermined time period) .

Inasimilarmanner, in the comparative verification processing of Step S713 between the communication logs for recording during the communication, there exist, for example, 2 kinds of communication logs having such a format as shown in FIG. 6 which are created during the communication performed from the client 20-1 to the application server 30-2, that is, (1) a communication log created by the client 20-1 (with the communication source ID being the ID of the client 20-1 and with the communication destination ID being the ID of the application server 30-2) and (2) a communication log created by the application server 30-2 (with the communication source ID being the ID of the application server 30-2 and with the communication destination ID being the ID of the client 20-1). The 2 kinds of communication logs can be judged as being consistent with each other in a case where the communication logs have: the same communication source address and communication source port number; the same communication destination address and communication destination port number; or the same communication destination URL if the communication destination URL information exists, and in a case (a) where the 2 kinds of communication logs have the same total amount in bytes of communication data exchanged from a given time until another given time (or total amounts in bytes having a difference equal to or less than a predetermined value) or a case (b) where the 2 kinds of communication logs have the same communication data after comparison.

In the case where the client 20-1 and the application server 30-2 periodically create the communication logs having such a format as shown in FIG. 6, the communication logs can also be judged as being consistent with each other in a case where there exist the communication logs periodically created by the client 20-1 and the application server 30-2.

FIG. 19 illustrates another processing alternative to that of FIG. 18 with regard to the consistency verification.
(1) The client 20-1 transmits a request for consistency verification to the log management server 50-1 via the session management server 40-1 (S720 and S721).
(2) The log management server 50-1 obtains the communication log stored in the log management server 50-2 from the log management server 50-2 via the session management server 40-1 and the session management server 40-2 (S722 to S728).
(3) The log management server 50-1 performs comparative verification between the communication log stored in the log management server 50-1 itself and the communication log which is stored in the log management server 50-2 and obtained in the processing (2) (S729), and returns the result of the consistency verification to the client 20-1 via the session management server 40-1 (S730 and S731).

Also, in the case illustrated in FIG. 19, the comparative verification processing of Step S729 may employ similar criteria to those of the example of FIG. 18.

Note that the apparatuses exchange data shown in FIG. 19 in the form of message transmission/reception by using the secure communication paths (encrypted communication paths) established in the following ranges (1) to (4) (to be specific, if a given secure communication path has already been established, by using the given secure communication path, and if no secure communication path has been established yet, by establishing a new secure communication path).
(1) between the client 20-1 and the session management server 40-1
(2) between the session management server 40-1 and the log management server 50-1
(3) between the session management server 40-1 and the session management server 40-2
(4) between the session management server 40-1 and the log management server 50-2

Further, the following exchange steps (a) to (d) between the apparatuses in the example of FIG. 19 can be performed by, for example, using the above-mentioned secure communication paths to transmit data as a session initiation protocol (SIP) message.
(a) transmit a consistency verification request (S720 and S721)
(b) transmit a communication log obtainment request (S722 to S724)
(c) return a communication log (S726 to S728)
(d) return the result of the consistency verification (S730 and S731)

In the example of FIG. 18, two secure communication paths are newly established between the client 20-1 and the log management server 50-1 and between the log management server 50-1 and the log management server 50-2, and those secure communication paths are used to transmit/receive messages for the consistency verification of Steps S700 and S714 and the communication log obtainment of Steps S710 and S712. However, in the example of FIG. 19, even without newly establishing those secure communication sessions, the above-mentioned secure communication paths, which have already been established, can be used to thereby reduce the number of communication sessions.

In each of the above-mentioned embodiments, the terminal apparatus and the server apparatus have been exemplified as the communication source apparatus and the communication destination apparatus. However, the present invention is not limited thereto, and the above-mentioned embodiments can be applied to such an apparatus as a gateway apparatus which is located on a boundary between different networks and which connects the networks to each other.

Further, in each of the above-mentioned embodiments, the description has been made of the case where the communication source apparatus and the communication destination apparatus belong to mutually different network domains. However, the present invention is not limited thereto, and the apparatuses may belong to the same network domain. In this case, one session management server and one log management server have the functions of the two session management servers and the functions of the two logmanagement servers, respectively, and perform the corresponding processing.

Further, the above-mentioned embodiments illustrate the processing performed in such the configuration having a log management server in each network domain as shown in FIG. 1. However, the present invention is not limited thereto. For example, the present invention can be applied even to a network configuration of an intra-company network or the like with the domains A and B being connected to each other via an intranet, in which the log management server belongs to neither of the domains and the log management server obtains and manages logs from apparatuses of respective domains.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A communication log management system for a network which is composed of a plurality of network domains including a first network domain and a second network domain, comprising:
- a communication source apparatus (20-1);
- a communication destination apparatus (30-2);
- a first session management server (40-1) which manages a communication performed within the first network domain;
- a first log management server (50-1) which manages a communication performed within the first network domain;
- a second session management server (40-2) which manages a communication performed within the second network domain; and
- a second log management server (50-2) which manages a communication performed within the second network domain;
wherein the communication source apparatus (20-1) and the first session management server (40-1) belonging to the first network domain, the communication destination apparatus (30-2) and the second session management server (40-2) belonging to the second network domain;
wherein the first session management server (40-1) of the first network domain to which the communication source apparatus (20-1) belongs and the second session management server (40-2) of the second network domain to which the communication destination apparatus (30-2) belongs are each configured to:
- mediate at least one of processing performed at a communication start of a communication and processing performed at a communication end of the communication in a case where the communication is performed between the communication source apparatus (20-1) and the communication destination apparatus (30-2);
wherein the first session management server (40-1) is configured
- to record a first session management log regarding the at least one of the processing performed at the communication start of the communication and the processing performed at the communication end of the communication; and
- to transmit the recorded first session management log to the first log management server; and
wherein the second session management server (40-2) is configured
- to record a second session management log regarding the at least one of the processing performed at the communication start of the communication and the processing performed at the communication end of the communication; and
- to transmit the recorded second session management log to the second log management server;
the communication source apparatus (20-1) is configured:
- to record a communication source apparatus log regarding at least one of the processing performed at the communication start, the processing performed at the communication end, and processing performed during the communication;
- to transmit the recorded communication source apparatus log to the first log management server; and
the communication destination apparatus (30-2) is configured:
- to record a communication destination apparatus log regarding at least one of the processing performed at the communication start, the processing performed at the communication end, and processing performed during the communication;
- to transmit the recorded communication destination apparatus log to the second log management server; and
the first log management server (50-1) is configured
- to receive the transmitted first session management log and the transmitted communication source apparatus log, and
- to manage the first session management log and the communication source apparatus log; and
the second log management server (50-2) is configured
- to receive the transmitted second session management log and the transmitted communication destination apparatus log, and
- to manage the second session management log and the communication destination apparatus log; and
the first log management server (50-1) or the second log management server (50-2) is configured:
- to perform verification of consistency between:
the first session management log which is managed by the first log management server (50-1) and the communication source apparatus log and
the second session management log which is managed by the second log management server (50-2) and the communication destination apparatus log;
- to judge whether or not the first session management log, the communication source apparatus log, the second session management log, and the communication destination apparatus log are consistent with each other; and
- to extract an inconsistent portion if inconsistency is found.

2. A communication log management system according to claim 1, wherein in the verification of consistency, the first log management server (50-1) or the second log management server (50-2) is configured to set an address and port number of the communication source apparatus and an address and port number of the communication destination apparatus, and optionally a communication destination URL as verification subjects of consistency regarding at least one of the processing performed at the communication start and the processing performed at the communication end.

3. A communication log management system according to any one of the preceding claims, wherein in the verification of the consistency, the first log management server (50-1) or the second log management server (50-2) is configured to set one of an amount in bytes of communication data communicated within a predetermined time period and content of the communication data as a verification subject of consistency regarding the processing performed during communication.

4. A communication log management system according to any one of the claims 1 or 3, wherein:
the first log management server (50-1) of the first network domain Is configured:
- to establish an encrypted communication path with respect to the second log management server (50-2) of the second network domain in a case of receiving from the communication source apparatus (20) a request for the verification of consistency between the first session management log and the communication source apparatus log that are managed by the first log management server (50-1) and the session management log and the communication destination apparatus log that are managed by the second log management server (50-2) of the second network domain; and
- to transmit a request to obtain the at least one of the second session management log and the communication destination apparatus log regarding the request for the verification of consistency, to the second log management server (50-2) via the encrypted communication path;
the second log management server (50-2) is configured
- to transmit the requested at least one of the second session management log and the communication destination apparatus log to the first log management server (50-1) via the encrypted communication path.

5. A communication log management system according to any one of claims 1 or 3, wherein:
the first log management server (50-1) of the first network domain is configured
- to transmit a request to obtain the second session management log and the communication destination apparatus log that are managed by the second log management server (50-2), to the first session management server (40-1) in a case of receiving a request for the verification of consistency between the first session management log and the communication source apparatus log that are managed by the first log management server and the second session management log and the communication destination apparatus log that are managed by the second log management server (50-2) of the second network domain;
the first session management server (40-1) is configured
- to transmit the obtaining request to the second session management server (40-2) of the second network domain;
the second session management server (40-2) is configured
- to obtain the requested second session management log and the communication destination apparatus log from the second log management server (50-2) based on the received obtaining request, and
- to transmit the obtained second session management log and the communication destination apparatus log to the first session management server (40-1) of the first network domain;
the first session management server (40-1) is configured
- to transmit the received second session management log and the communication destination apparatus log to the first log management server (50-1).

## Patentansprüche

1. Kommunikationsprotokoll-Verwaltungssystem für ein Netzwerk, das aus mehreren Netzwerkdomänen besteht, einschließlich einer ersten Netzwerkdomäne und einer zweiten Netzwerkdomäne, mit:
- einer Kommunikationsquellenvorrichtung (20-1);
- einer Kommunikationszielvorrichtung (30-2);
- einem ersten Sitzungsverwaltungsserver (40-1), der eine Kommunikation verwaltet, die innerhalb der ersten Netzwerkdomäne durchgeführt wird;
- einem ersten Protokollverwaltungsserver (50-1), der eine Kommunikation verwaltet, die innerhalb der ersten Netzwerkdomäne durchgeführt wird;
- einem zweiten Sitzungsverwaltungsserver (40-2), der eine Kommunikation verwaltet, die innerhalb der zweiten Netzwerkdomäne durchgeführt wird; und
- einem zweiten Protokollverwaltungsserver (50-2), der eine Kommunikation verwaltet, die innerhalb der zweiten Netzwerkdomäne durchgeführt wird;
wobei die Kommunikationsquellenvorrichtung (20-1) und der erste Sitzungsverwaltungsserver (40-1), die zur ersten Netzwerkdomäne gehören, die Kommunikationszielvorrichtung (30-2) und der zweite Sitzungsverwartungsserver (40-2), die zur zweiten Netzwerkdomäne gehören;
wobei der erste Sitzungsverwaltungsserver (40-1) der ersten Netzwerkdomäne, zu der die Kommunikationsquellenvorrichtung (20-1) gehört, und der zweite Sitzungsverwaltungsserver (40-2) der zweiten Netzwerkdomäne, zu der die Kommunikationszielvorrichtung (30-2) gehört, jeweils dazu konfiguriert sind:
- eine Verarbeitung, die bei einem Kommunikationsbeginn einer Kommunikation erfolgt, und/oder eine Verarbeitung, die bei einem Kommunikationsende der Kommunikation erfolgt, in einem Fall, in dem die Kommunikation zwischen der Kommunikationsquellenvorrichtung (20-1) und der Kommunikationszielvorrichtung (30-2) erfolgt, zu vermitteln;
wobei der erste Sitzungsverwaltungsserver (40-1) dazu konfiguriert ist,
- ein erstes Sitzungsverwaltungsprotokoll in Bezug auf die Verarbeitung, die beim Kommunikationsbeginn der Kommunikation erfolgt, und/oder die Verarbeitung, die beim Kommunikationsende der Kommunikation erfolgt, aufzuzeichnen; und
- das aufgezeichnete erste Sitzungsverwaltungsprotokoll zum ersten Protokollverwaltungsserver zu übertragen; und
wobei der zweite Sitzungsverwaltungsserver (40-2) dazu konfiguriert ist,
- ein zweites Sitzungsverwaltungsprotokoll in Bezug auf die Verarbeitung, die beim Kommunikationsbeginn der Kommunikation erfolgt, und/oder die Verarbeitung, die beim Kommunikationsende der Kommunikation erfolgt, aufzuzeichnen; und
- das aufgezeichnete zweite Sitzungsverwaltungsprotokoll an den zweiten Protokollverwaltungsserver zu übertragen;
die Kommunikationsquellenvorrichtung (20-1) dazu konfiguriert ist:
- ein Kommunikationsquellenvorrichtungsprotokoll in Bezug auf die Verarbeitung, die beim Kommunikationsbeginn erfolgt, und/oder die Verarbeitung, die beim Kommunikationsende erfolgt, und/oder die Verarbeitung, die während der Kommunikation erfolgt, aufzuzeichnen;
- das aufgezeichnete Kommunikationsquellenvorrichtungsprotokoll an den ersten Protokollverwaltungsserver zu übertragen; und
die Kommunikationszielvorrichtung (30-2) dazu konfiguriert ist:
- ein Kommunikationszielvorrichtungsprotokoll, das in Bezug auf die Verarbeitung, die beim Kommunikationsbeginn erfolgt, und/oder die Verarbeitung, die beim Kommunikationsende erfolgt, und/oder die Verarbeitung, die während der Kommunikation erfolgt, aufzuzeichnen;
- das aufgezeichnete Kommunikationszielvorrichtungsprotokoll an den zweiten Protokollverwaltungsserver zu übertragen; und
der erste Protokollverwaltungsserver (50-1) dazu konfiguriert ist,
- das übertragene erste Sitzungsverwaltungsprotokoll und das übertragene Kommunikationsquellenvorrichtungsprotokoll zu empfangen, und
- das erste Sitzungsverwaltungsprotokoll und das Kommunikationsquellenvorrichtungsprotokoll zu verwalten; und
der zweite Protokollverwaltungsserver (50-2) dazu konfiguriert ist,
- das übertragene zweite Sitzungsverwaltungsprotokoll und das übertragene Kommunikationszielvorrichtungsprotokoll zu empfangen, und
- das zweite Sitzungsverwaltungsprotokoll und das Kommunikationszielvorrichtungsprotokoll zu verwalten; und
der erste Protokollverwaltungsserver (50-1) oder der zweite Protokollverwaltungsserver (50-2) dazu konfiguriert ist:
- eine Überprüfung der Konsistenz durchzuführen zwischen:
dem ersten Sitzungsverwaltungsprotokoll, das vom ersten Protokollverwaltungsserver (50-1) und dem Kommunikationsquellenvorrichtungsprotokoll verwaltet wird, und
dem zweiten Sitzungsverwaltungsprotokoll, das vom zweiten Protokollverwaltungsserver (50-2) und dem Kommunikationszielvorrichtungsprotokoll verwaltet wird;
- zu beurteilen, ob das erste Sitzungsverwaltungsprotokoll, das Kommunikationsquellenvorrichtungsprotokoll, das zweite Sitzungsverwaltungsprotokoll und das Kommunikationszielvorrichtungsprotokoll miteinander konsistent sind oder nicht; und
- einen inkonsistenten Bereich zu extrahieren, wenn eine Inkonsistenz festgestellt wird.

2. Kommunikationsprotokoll-Verwaltungssystem nach Anspruch 1, wobei bei der Überprüfung der Konsistenz der erste Protokollverwaltungsserver (50-1) oder der zweite Protokollverwaltungsserver (50-2) dazu konfiguriert ist, eine Adresse und Portnummer der Kommunikationsquellenvorrichtung und eine Adresse und Portnummer der Kommunikationszielvorrichtung und gegebenenfalls eine Kommunikationsziel-URL als Überprüfungsgegenstände der Konsistenz in Bezug auf die Verarbeitung, die beim Kommunikationsbeginn erfolgt, und/oder die Verarbeitung, die beim Kommunikationsende erfolgt, einzustellen.

3. Kommunikationsprotokoll-Verwaltungssystem nach irgendeinem der vorhergehenden Ansprüche, wobei bei der Überprüfung der Konsistenz der erste Protokollverwaltungsserver (50-1) oder der zweite Protokollverwaltungsserver (50-2) dazu konfiguriert ist, eines einer Menge in Bytes von Kommunikationsdaten, die innerhalb einer Zeitspanne kommuniziert werden, und eines Inhalts der Kommunikationsdaten als Überprüfungsgegenstand der Konsistenz in Bezug auf die während der Kommunikation erfolgte Verarbeitung einzustellen.

4. Kommunikationsprotokoll-Verwaltungssystem nach irgendeinem der Ansprüche 1 oder 3, wobei:
der erste Protokollverwaltungsserver (50-1) der ersten Netzwerkdomäne dazu konfiguriert ist:
- einen verschlüsselten Kommunikationspfad in Bezug auf den zweiten Protokollverwaltungsserver (50-2) der zweiten Netzwerkdomäne in einem Fall eines Empfangs einer Anfrage von der Kommunikationsquellenvorrichtung (20) nach der Überprüfung der Konsistenz zwischen dem ersten Sitzungsverwaltungsprotokoll und dem Kommunikationsquellenvorrichtungsprotokoll, die von dem ersten Protokollverwaltungsserver (50-1) verwaltet werden, und dem Sitzungsverwaltungsprotokoll und dem Kommunikationszielvorrichtungsprotokoll, die von dem zweiten Protokollverwaltungsserver (50-2) der zweiten Netzwerkdomäne verwaltet werden, herzustellen; und
- eine Anfrage zum Erhalt des zweiten Sitzungsverwaltungsprotokolls und/oder des Kommunikationszielvorrichtungsprotokolls in Bezug auf die Anfrage nach der Überprüfung der Konsistenz an den zweiten Protokollverwaltungsserver (50-2) über den verschlüsselten Kommunikationspfad zu übertragen;
der zweite Protokollverwaltungsserver (50-2) dazu konfiguriert ist,
- das angefragte zweite Sitzungsverwaltungsprotokoll und/oder das Kommunikationszielvorrichtungsprotokoll an den ersten Protokollverwaltungsserver (50-1) über den verschlüsselten Kommunikationspfad zu übertragen.

5. Kommunikationsprotokoll-Verwaltungssystem nach irgendeinem der Ansprüche 1 oder 3, wobei:
der erste Protokollverwaltungsserver (50-1) der ersten Netzwerkdomäne dazu konfiguriert ist,
- eine Anfrage zum Erhalt des zweiten Sitzungsverwaltungsprotokolls und des Kommunikationszielvorrichtungsprotokolls, die vom zweiten Protokollverwaltungsserver (50-2) verwaltet werden, in einem Fall des Empfangens einer Anfrage nach der Überprüfung der Konsistenz zwischen dem ersten Sitzungsverwaltungsprotokoll und dem Kommunikationsquellenverwaltungsprotokoll, die von dem ersten Protokollverwaltungsserver verwaltet werden, und dem zweiten Sitzungsverwaltungsprotokoll und dem Kommunikationszielvorrichtungsprotokoll, die von dem zweiten Protokollverwaltungsserver (50-2) der zweiten Netzwerkdomäne verwaltet werden, an den ersten Sitzungsverwaltungsserver (40-1) zu übertragen;
der erste Sitzungsverwaltungsserver (40-1) dazu konfiguriert ist,
- die erhaltene Anfrage an den zweiten Sitzungsverwaltungsserver (40-2) der zweiten Netzwerkdomäne zu übertragen;
der zweite Sitzungsverwaltungsserver (40-2) dazu konfiguriert ist,
- das angefragte zweite Sitzungsverwaltungsprotokoll und das Kommunikationszielvorrichtungsprotokoll von dem zweiten Protokollverwaltungsserver (50-2) auf der Basis der empfangenen Erhaltungsanfrage zu erhalten, und
- das erhaltene zweite Sitzungsverwaltungsprotokoll und das Kommunikationszielvorrichtungsprotokoll an den ersten Sitzungsverwaltungsserver (40-1) der ersten Netzwerkdomäne zu übertragen;
der erste Sitzungsverwaltungsserver (40-1) dazu konfiguriert ist,
- das empfangene zweite Sitzungsverwaltungsprotokoll und das Kommunikationszielvorrichtungsprotokoll an den ersten Protokollverwaltungsserver (50-1) zu übertragen.

## Revendications

1. Système de gestion de journal de communication pour un réseau qui est composé d'une pluralité de domaines de réseau incluant un premier domaine de réseau et un second domaine de réseau, comprenant :
- un appareil source de communication (20-1) ;
- un appareil de destination de communication (30-2) ;
- un premier serveur de gestion de session (40-1) qui gère une communication effectuée à l'intérieur du premier domaine de réseau ;
- un premier serveur de gestion de journal (50-1) qui gère une communication effectuée à l'intérieur du premier domaine de réseau ;
- un second serveur de gestion de session (40-2) qui gère une communication effectuée à l'intérieur du second domaine de réseau ; et
- un second serveur de gestion de journal (50-2) qui gère une communication effectuée à l'intérieur du second domaine de réseau ; dans lequel l'appareil source de communication (20-1) et le premier serveur de gestion de session (40-1) appartiennent au premier domaine de réseau, l'appareil destination de communication (30-2) et le second serveur de gestion de session (40-2) appartiennent au second domaine de réseau ;
dans lequel le premier serveur de gestion de session (40-1) du premier domaine de réseau auquel appartient l'appareil source de communication (20-1) et le second serveur de gestion de session (40-2) du second domaine de réseau auquel appartient l'appareil destination de communication (30-2) sont configurés chacun pour :
- faire une médiation d'au moins un traitement parmi un traitement exécuté au départ d'une communication et un traitement effectué à la fin d'une communication dans le cas où la communication est effectuée entre l'appareil source de communication (20-1) et l'appareil destination de communication (30-2) ;
dans lequel le premier serveur de gestion de session (40-1) est configuré
- pour enregistrer un premier journal de gestion de session concernant ledit au moins un traitement parmi le traitement exécuté au départ de la communication et le traitement exécuté à la fin de la communication ; et
- pour transmettre le premier journal de gestion de session enregistré vers le premier serveur de gestion de journal ; et
dans lequel le second serveur de gestion de session (40-2) est configuré
- pour enregistrer un second journal de gestion de session concernant ledit au moins un traitement parmi le traitement exécuté au départ de la communication et le traitement exécuté à la fin de la communication, et
- pour transmettre le second journal de gestion de session enregistré vers le second serveur de gestion de journal ;
l'appareil source de communication (20-1) est configuré :
- pour enregistrer un journal d'appareil source de communication concernant au moins un traitement parmi le traitement exécuté au départ de la communication, le traitement exécuté à la fin de la communication, et un traitement exécuté pendant la communication ;
- pour transmettre le journal enregistré de l'appareil source de communication vers le premier serveur de gestion de journal ; et l'appareil destination de communication (30-2) est configuré :
- pour enregistrer un journal d'appareil destination de communication concernant au moins un traitement parmi le traitement exécuté au départ de la communication, le traitement exécuté à la fin de la communication, et le traitement exécuté pendant la communication ;
- pour transmettre le journal enregistré de l'appareil destination de communication vers le second serveur de gestion de journal ; et
le premier serveur de gestion de journal (50-1) est configuré
- pour recevoir le premier journal transmis de gestion de session et le journal transmis de l'appareil source de communication, et
- pour gérer le premier journal de gestion de session et le journal d'appareil source de communication ; et
le second serveur de gestion de journal (50-2) est configuré
- pour recevoir le second journal transmis de gestion de session et le journal transmis de l'appareil destination de communication ; et
- pour gérer le second journal de gestion de session et le journal de l'appareil destination de communication ; et
le premier serveur de gestion de journal (50-1) ou le second serveur de gestion de journal (50-2) est configuré :
- pour exécuter une vérification d'homogénéité entre :
le premier journal de gestion de session qui est géré par le premier serveur de gestion de journal (50-1) et le journal de l'appareil source de communication, et
le second journal de gestion de session qui est géré par le second serveur de gestion de journal (50-2) et le journal de l'appareil destination de communication :
- pour juger si le premier journal de gestion de session, le journal de l'appareil source de communication, le second journal de gestion de session, et le journal de l'appareil destination de communication sont homogènes les uns avec les autres ou non ; et
- pour extraire une portion non homogène s'il constate une non-homogénéité.

2. Système de gestion de journal de communication selon la revendication 1, dans lequel, dans la vérification d'homogénéité, le premier serveur de gestion de journal (50-1) ou le second serveur de gestion de journal (50-2) est configuré pour fixer une adresse et un numéro de port de l'appareil source de communication, et une adresse et un numéro de port de l'appareil destination de communication, et en option une URL de destination de communication, à titre de sujets de vérification d'homogénéité concernant au moins un traitement parmi le traitement exécuté au départ de la communication et le traitement exécuté à la fin de la communication,

3. Système de gestion de journal de communication selon l'une quelconque des revendications précédentes, dans lequel, dans la vérification d'homogénéité, le premier serveur de gestion de journal (50-1) ou le second serveur de gestion de journal (50-2) est configuré pour fixer un paramètre parmi un nombre d'octets des données de communication communiquée pendant une période temporelle prédéterminée et le contenu des données de communication, à titre de sujets de vérification d'homogénéité concernant le traitement exécuté pendant la communication.

4. Système de gestion de journal de communication selon l'une quelconque des revendications 1 ou 3, dans lequel :
le premier serveur de gestion de journal (50-1) du premier domaine de réseau est configuré :
- pour établir un trajet de communication cryptée à l'égard du second serveur de gestion de journal (50-2) du second domaine de réseau dans le cas où il reçoit de l'appareil source de communication (20) une requête pour la vérification d'homogénéité entre le premier journal de gestion de session et le journal de l'appareil source de communication qui sont gérés par le premier serveur de gestion de journal (50-1), et le journal de gestion de session et le journal de l'appareil destination de communication qui sont gérés par le second serveur de gestion de journal (50-2) du second domaine de réseau ; et
- pour transmettre une requête afin d'obtenir ledit au moins un journal parmi le second journal de gestion de session et le journal de l'appareil destination de communication concernant la requête pour la vérification d'homogénéité, vers le second serveur de gestion de journal (50-2) via le trajet de communication cryptée ;
le second serveur de gestion de journal (50-2) est configuré
- pour transmettre ledit au moins un journal requis parmi le second journal de gestion de session et le journal de l'appareil destination de communication vers le premier serveur de gestion de journal (50-1) via le trajet de communication cryptée.

5. Système de gestion de journal de communication selon l'une quelconque des revendications 1 ou 3, dans lequel :
le premier serveur de gestion de journal (50-1) du premier domaine de réseau est configuré
- pour transmettre une requête afin d'obtenir le second journal de gestion de session et le journal de l'appareil destination de communication qui sont gérés par le second serveur de gestion de journal (50-2), vers le premier serveur de gestion de session (40-1) dans un cas où il reçoit une requête pour la vérification d'homogénéité entre le premier journal de gestion de session et le journal de l'appareil source de communication qui sont gérés par le premier serveur de gestion de journal, et le second journal de gestion de session et le journal de l'appareil destination de communication qui sont gérés par le second serveur de gestion de journal (50-2) du second domaine de réseau ;
le premier serveur de gestion de session (40-1) est configuré
- pour transmettre la requête d'obtention vers le second serveur de gestion de session (40-2) du second domaine de réseau ;
le second serveur de gestion de session (40-2) est configuré
- pour obtenir le second journal de gestion de session requis et le journal de l'appareil de destination de communication requis, depuis le second serveur de gestion de journal (50-2) en se basant sur la requête d'obtention reçue, et
- pour transmettre le second journal de gestion de session obtenu et le journal de l'appareil destination de communication obtenu vers le premier serveur de gestion de session (40-1) du premier domaine de réseau ;
le premier serveur de gestion de session (40-1) est configuré
- pour transmettre le second journal de gestion de session reçu et le journal de l'appareil destination de communication reçu vers le premier serveur de gestion de journal (50-1).
